(19)

Europäisches Patentamt
European Patent Office
Office européen des brevets

(11) **EP 4 787 937 A1**

(12) **EUROPEAN PATENT APPLICATION**
published in accordance with Art. 153(4) EPC

(43) Date of publication:
**05.08.2026 Bulletin 2026/32**

(21) Application number: **24870898.4**

(22) Date of filing: **26.09.2024**

(51) International Patent Classification (IPC):
*H04W 24/08* (2009.01)

(86) International application number:
**PCT/CN2024/121509**

(87) International publication number:
**WO 2025/067359 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.09.2023 CN 202311255631**

(71) Applicant: **China United Network Communications Group Company Limited Beijing 100033 (CN)**

(72) Inventors:
• **JIN, Yuchao Beijing 100033 (CN)**
• **LI, Yi Beijing 100033 (CN)**

• **LI, Deyi Beijing 100033 (CN)**
• **WANG, Jingyun Beijing 100033 (CN)**
• **ZHENG, Yuting Beijing 100033 (CN)**
• **CHENG, Xinzhou Beijing 100033 (CN)**
• **JIA, Yuwei Beijing 100033 (CN)**
• **CAO, Lijuan Beijing 100033 (CN)**
• **GUO, Shengli Beijing 100033 (CN)**
• **XIAO, Tian Beijing 100033 (CN)**

(74) Representative: **Petraz, Gilberto Luigi et al GLP S.r.l. Viale Europa Unita, 171 33100 Udine (IT)**

(54) **AIR-INTERFACE PERFORMANCE EVALUATION METHOD AND APPARATUS, AND STORAGE MEDIUM**

(57) The present application relates to the technical field of communications. Provided are an air-interface performance evaluation method and apparatus, and a storage medium, which are used for solving the technical problem in the prior art of a lack of air-interface efficiency measurement methods applicable to a MASSIVE MIMO scenario. The air-interface performance evaluation method comprises: acquiring a plurality of first physical resource block (PRB) numbers of a target cell within a first preset period, wherein the first PRB number is a number of PRBs in the target cell that are jointly determined on the basis of RANK and a MCS indexes in a MCS table; and determining, on the basis of each of the first PRB numbers and a spectral efficiency that each of the first PRB numbers corresponds to, a target air-interface efficiency of the target cell within the first preset period, wherein the spectral efficiency that the first PRB numbers corresponds to is determined on the basis of a first MCS table and a first MCS index corresponding to the first PRB number.

Acquire a plurality of first PRB numbers of a target cell within a first preset period — S301

Determine a target air interface efficiency of the target cell within a first preset period based on each first PRB number and a spectrum efficiency corresponding to each first PRB number — S302

**Fig. 3**

EP 4 787 937 A1

**Description**

The present application claims priority to Chinese patent application No. 202311255631.3, entitled "Air-interface performance evaluation method and apparatus, and storage medium," and filed on September 26, 2023, the content of which is incorporated herein by reference in its entirety.

**Field of the Invention**

The present application relates to the technical field of communications, and in particular, to an air-interface performance evaluation method and apparatus, and a storage medium of the same.

**Background of the Invention**

The air-interface efficiency of a cell is a very important index, and plays a critical role in network optimization. In a 5th generation mobile communication technology (5G) network, there are a plurality of measurement methods for the air-interface efficiency of a cell.

At present, since a massive multi-antenna technology (massive multiple input multiple output (MASSIVE MIMO)) has been introduced into the 5G network, the existing measurement methods have been unable to be applied to a MASSIVE MIMO scenario. Therefore, there is an urgent need for an air-interface efficiency measurement method suitable to be used in the MASSIVE MIMO scenario.

**Summary of the Invention**

The present invention provides an air-interface performance evaluation method and apparatus, and a storage medium of the same, which are used for solving the technical problem in the prior art of a lack of air-interface efficiency measurement methods applicable to a MASSIVE MIMO scenario.

In order to achieve the above objective, the present application adopts the following technical solutions:

In a first aspect, provided is an air-interface performance evaluation method, comprising: acquiring a plurality of first physical resource block (PRB) numbers of a target cell within a first preset period, wherein the first PRB number is a number of PRBs in the target cell that are jointly determined on the basis of number of rank space division multiplexing streams (RANK) and a MCS index in a modulation and coding scheme (MCS) table; and determining, on the basis of each of the first PRB numbers and a spectral efficiency that each of the first PRB numbers corresponds to, a target air-interface efficiency of the target cell within the first preset period, wherein the spectral efficiency that the first PRB numbers corresponds to is determined on the basis of a first MCS table and a first MCS index corresponding to the first PRB number.

Optionally, the target air-interface efficiency comprises a first-type air-interface efficiency; and the step of determining, on the basis of each of the first PRB numbers and a spectral efficiency that each of the first PRB numbers corresponds to, a target air-interface efficiency of the target cell within the first preset period comprises: acquiring a second PRB number of the target cell within the first preset period, wherein the second PRB number is a PRB number occupied by a channel in the target cell; determining, on the basis of the first MCS index and the first MCS table, the spectral efficiency that each of the first PRB numbers corresponds to; and determining a ratio of a sum of a plurality of first products to the second PRB number as the first-type air-interface efficiency, wherein any one of the first products is a product of the first PRB number, first RANK corresponding to the first PRB number, and the spectral efficiency that the first PRB numbers corresponds to.

Optionally, the step of a acquiring a second PRB number of the target cell within the first preset period comprises: determining a sum of a plurality of third PRB numbers as the second PRB number, wherein any one of the third PRB numbers is a PRB number occupied by each scheduling of a channel of the target cell within the first preset period.

Optionally, the step of acquiring a second PRB number of the target cell within the first preset period comprises: determining a product of a target PRB utilization rate and a target available PRB number as the second PRB number, wherein the target PRB utilization rate is a PRB utilization rate of a channel of the target cell within the first preset period, and the target available PRB number is an accumulated value of available PRB numbers for the channel of the target cell during multiple scheduling instances within the first preset period.

Optionally, the step of acquiring a second PRB number of the target cell within the first preset period comprises: determining a product of a fourth PRB number and scheduling count of a channel of the target cell within the first preset period as the second PRB number, wherein the fourth PRB number is an even of PRB numbers that are occupied by the channel of the target cell during multiple scheduling instances within the first preset period.

Optionally, the step of acquiring a second PRB number of the target cell within the first preset period comprises: determining a sum of a plurality of fifth PRB numbers as the second PRB number, wherein any one of the fifth PRB numbers is an accumulated value of PRB numbers on a plurality of space division layers during scheduling of a channel of the target cell at every preset moment within the first preset period.

Optionally, the channel of the target cell is a downlink PDSCH channel or an uplink PUSCH channel; and when the channel of the target cell is the downlink PDSCH channel, the first-type air-interface efficiency should meet the following formula:

$$AvgDLMcsEfficiency\_Cell = \frac{\sum_{X,Y,Z} X * CARR.PDSCHMCSDist.BinX.BinY.BinZ * efficiency_Z^Y}{M1(T)};$$

wherein, the *AvgDLMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; the *efficiency_Z^Y* is the spectral efficiency that the first PRB numbers corresponds to when the MCS table is the Y and the MCS index is the Z; and the *M1(T)* is the second PRB number.

Optionally, the channel of the target cell is a downlink PDSCH channel or an uplink PUSCH channel; and when the channel of the target cell is the uplink PUSCH channel, the first-type air-interface efficiency should meet the following formula:

$$AvgULMcsEfficiency\_Cell = \frac{\sum_{X,Y,Z} X * CARR.PUSCHMCSDist.BinX.BinY.BinZ * efficiency_Z^Y}{M1(T)};$$

wherein, the *AvgULMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; the *efficiency_Z^Y* is the spectral efficiency that the first PRB numbers corresponds to when the MCS table is the Y and the MCS index is the Z; and the *M1(T)* is the second PRB number.

Optionally, the target air-interface efficiency comprises a second-type air-interface efficiency; and the step of determining, on the basis of each of the first PRB numbers and a spectral efficiency that each of the first PRB numbers corresponds to, a target air-interface efficiency of the target cell within the first preset period comprises: determining, on the basis of the first MCS index and the first MCS table, the spectral efficiency that each of the first PRB numbers corresponds to; and determining a ratio of a sum of a plurality of second products to a sum of the plurality of first PRB numbers as the second-type air-interface efficiency, wherein any one of the second products is a product of the first PRB number, first RANK corresponding to the first PRB number, and the spectral efficiency that the first PRB numbers corresponds to.

Optionally, the channel of the target cell is a downlink PDSCH channel or an uplink PUSCH channel; and when the channel of the target cell is the downlink PDSCH channel, the second-type air-interface efficiency should meet the following formula:

$$AvgDLMcsEfficiency\_UE = \frac{\sum_{X,Y,Z} X * CARR.PDSCHMCSDist.BinX.BinY.BinZ * efficiency_Z^Y}{\sum_{X,Y,Z} CARR.PDSCHMCSDist.BinX.BinY.BinZ};$$

wherein, the *AvgDLMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; the *efficiency_Z^Y* is the spectral efficiency that the first PRB numbers corresponds to when the MCS table is the Y and the MCS index is the Z.

Optionally, the channel of the target cell is a downlink PDSCH channel or an uplink PUSCH channel; and when the channel of the target cell is the uplink PUSCH channel, the second-type air-interface efficiency should meet the following formula:

$$AvgULMcsEfficiency\_UE = \frac{\sum_{X,Y,Z} X * CARR.PUSCHMCSDist.BinX.BinY.BinZ * efficiency_Z^Y}{\sum_{X,Y,Z} CARR.PUSCHMCSDist.BinX.BinY.BinZ};$$

wherein, the *AvgULMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; and the *efficiency$_Z^Y$* is the spectral efficiency that the first PRB numbers corresponds to when the MCS table is the Y and the MCS index is the Z.

Optionally, the target air-interface efficiency comprises a third-type air-interface efficiency; and the step of determining, on the basis of each of the first PRB numbers and a spectral efficiency that each of the first PRB numbers corresponds to, a target air-interface efficiency of the target cell within the first preset period comprises: determining, on the basis of the first MCS index and the first MCS table, the spectral efficiency that each of the first PRB numbers corresponds to; and determining a ratio of a sum of a plurality of third products to a sum of the plurality of first PRB numbers as the third-type air-interface efficiency, wherein any one of the third products is a product of the first PRB number and the spectral efficiency that the first PRB numbers corresponds to.

Optionally, the channel of the target cell is a downlink PDSCH channel or an uplink PUSCH channel; and when the channel of the target cell is the downlink PDSCH channel, the third-type air-interface efficiency should meet the following formula:

$$AvgDLMcsEfficiency = \frac{\sum_{X,Y,Z} CARR.PDSCHMCSDist.BinX.BinY.BinZ * efficiency_Z^Y}{\sum_{X,Y,Z} CARR.PDSCHMCSDist.BinX.BinY.BinZ} ;$$

wherein, the *AvgDLMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; and the *efficiency$_Z^Y$* is the spectral efficiency that the first PRB numbers corresponds to when the MCS table is the Y and the MCS index is the Z.

Optionally, the channel of the target cell is a downlink PDSCH channel or an uplink PUSCH channel; and when the channel of the target cell is the uplink PUSCH channel, the third-type air-interface efficiency should meet the following formula:

$$AvgULMcsEfficiency = \frac{\sum_{X,Y,Z} CARR.PUSCHMCSDist.BinX.BinY.BinZ * efficiency_Z^Y}{\sum_{X,Y,Z} CARR.PUSCHMCSDist.BinX.BinY.BinZ} ;$$

wherein, the *AvgULMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the *X*, the MCS table is the *Y*, and the MCS index is the Z; and the *efficiency$_Z^Y$* is the spectral efficiency that the first PRB numbers corresponds to when the MCS table is the Y and the MCS index is the Z.

According to a second aspect, an air-interface performance evaluation apparatus is provided, comprising: an acquisition unit and a processing unit, wherein, the acquisition unit is configured to acquire a plurality of first physical resource block (PRB) numbers of a target cell within a first preset period, wherein the first PRB number is a number of PRBs in the target cell that are jointly determined on the basis of RANK and a MCS index in a MCS table; and the processing unit is configured to determine, on the basis of each of the first PRB numbers and a spectral efficiency that each of the first PRB numbers corresponds to, a target air-interface efficiency of the target cell within the first preset period, wherein the spectral efficiency that the first PRB numbers corresponds to is determined on the basis of a first MCS table and a first MCS index corresponding to the first PRB number.

Optionally, the target air-interface efficiency comprises a first-type air-interface efficiency; and the processing unit is specifically configured to: acquire a second PRB number of the target cell within the first preset period, wherein the second PRB number is a PRB number occupied by a channel in the target cell; determine, on the basis of the first MCS index and the first MCS table, the spectral efficiency that each of the first PRB numbers corresponds to; and determine a ratio of a sum of a plurality of first products to the second PRB number as the first-type air-interface efficiency, wherein any one of the first products is a product of the first PRB number, first RANK corresponding to the first PRB number, and the spectral efficiency that the first PRB numbers corresponds to.

Optionally, the acquisition unit is specifically configured to: determine a sum of a plurality of third PRB numbers as the second PRB number, wherein any one of the third PRB numbers is a PRB number occupied by each scheduling of a channel of the target cell within the first preset period.

Optionally, the acquisition unit is specifically configured to: determine a product of a target PRB utilization rate and a target available PRB number as the second PRB number, wherein the target PRB utilization rate is a PRB utilization rate of a channel of the target cell within the first preset period, and the target available PRB number is an accumulated value of available PRB numbers for the channel of the target cell during multiple scheduling instances within the first preset period.

Optionally, the acquisition unit is specifically configured to determine a product of a fourth PRB number and scheduling count of a channel of the target cell within the first preset period as the second PRB number, wherein the fourth PRB number is an even of PRB numbers that are occupied by the channel of the target cell during multiple scheduling instances within the first preset period.

Optionally, the acquisition unit is specifically configured to: determine a sum of a plurality of fifth PRB numbers as the second PRB number, wherein any one of the fifth PRB numbers is an accumulated value of PRB numbers on a plurality of space division layers during scheduling of a channel of the target cell at each preset moment within the first preset period.

Optionally, the channel of the target cell is a downlink PDSCH channel or an uplink PUSCH channel; and when the channel of the target cell is the downlink PDSCH channel, the first-type air-interface efficiency should meet the following formula:

$$AvgDLMcsEfficiency\_Cell = \frac{\sum_{X,Y,Z} X * CARR.PDSCHMCSDist.BinX.BinY.BinZ * efficiency_Z^Y}{M1(T)};$$

wherein, the *AvgDLMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; the *efficiency$_Z^Y$* is the spectral efficiency that the first PRB numbers corresponds to when the MCS table is the Y and the MCS index is the Z; and the *M1(T)* is the second PRB number.

Optionally, the channel of the target cell is a downlink PDSCH channel or an uplink PUSCH channel; and when the channel of the target cell is the uplink PUSCH channel, the first-type air-interface efficiency should meet the following formula:

$$AvgULMcsEfficiency\_Cell = \frac{\sum_{X,Y,Z} X * CARR.PUSCHMCSDist.BinX.BinY.BinZ * efficiency_Z^Y}{M1(T)};$$

wherein, the *AvgULMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; the *efficiency$_Z^Y$* is the spectral efficiency that the first PRB numbers corresponds to when the MCS table is the Y and the MCS index is the Z; and the *M1(T)* is the second PRB number.

Optionally, the target air-interface efficiency comprises a second-type air-interface efficiency; and the processing unit is specifically configured to: determine, on the basis of the first MCS index and the first MCS table, the spectral efficiency that each of the first PRB numbers corresponds to; and determine a ratio of a sum of a plurality of second products to a sum of the plurality of first PRB numbers as the second-type air-interface efficiency, wherein any one of the second products is a product of the first PRB number, first RANK corresponding to the first PRB number, and the spectral efficiency that the first PRB numbers corresponds to.

Optionally, the channel of the target cell is a downlink PDSCH channel or an uplink PUSCH channel; and when the channel of the target cell is the downlink PDSCH channel, the second-type air-interface efficiency should meet the following formula:

$$AvgDLMcsEfficiency\_UE = \frac{\sum_{X,Y,Z} X * CARR.PDSCHMCSDist.BinX.BinY.BinZ * efficiency_Z^Y}{\sum_{X,Y,Z} CARR.PDSCHMCSDist.BinX.BinY.BinZ};$$

wherein, the *AvgDLMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; and the *efficiency$_Z^Y$* is the spectral efficiency that the first PRB numbers corresponds to when the MCS table is the Y and the MCS index is the Z.

Optionally, the channel of the target cell is a downlink PDSCH channel or an uplink PUSCH channel; and when the channel of the target cell is the uplink PUSCH channel, the second-type air-interface efficiency should meet the following formula:

$$AvgULMcsEfficiency\_UE = \frac{\sum_{X,Y,Z} X * CARR.PUSCHMCSDist.BinX.BinY.BinZ * efficiency_Z^Y}{\sum_{X,Y,Z} CARR.PUSCHMCSDist.BinX.BinY.BinZ}$$

;

wherein, the *AvgULMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; and the *efficiency_Z^Y* is the spectral efficiency that the first PRB numbers corresponds to when the MCS table is the Y and the MCS index is the Z.

Optionally, the target air-interface efficiency comprises a third-type air-interface efficiency; and the processing unit is specifically configured to: determine, on the basis of the first MCS index and the first MCS table, the spectral efficiency that each of the first PRB numbers corresponds to; and determine a ratio of a sum of a plurality of third products to a sum of the plurality of first PRB numbers as the third-type air-interface efficiency, wherein any one of the third products is a product of the first PRB number and the spectral efficiency that the first PRB numbers corresponds to.

Optionally, the channel of the target cell is a downlink PDSCH channel or an uplink PUSCH channel; and when the channel of the target cell is the downlink PDSCH channel, the third-type air-interface efficiency should meet the following formula:

$$AvgDLMcsEfficiency = \frac{\sum_{X,Y,Z} CARR.PDSCHMCSDist.BinX.BinY.BinZ * efficiency_Z^Y}{\sum_{X,Y,Z} CARR.PDSCHMCSDist.BinX.BinY.BinZ}$$

;

wherein, the *AvgDLMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; and the *efficiency_Z^Y* is the spectral efficiency that the first PRB numbers corresponds to when the MCS table is the Y and the MCS index is the Z.

Optionally, the channel of the target cell is a downlink PDSCH channel or an uplink PUSCH channel; and when the channel of the target cell is the uplink PUSCH channel, the third-type air-interface efficiency should meet the following formula:

$$AvgULMcsEfficiency = \frac{\sum_{X,Y,Z} CARR.PUSCHMCSDist.BinX.BinY.BinZ * efficiency_{MCS_Z}^{TableY}}{\sum_{X,Y,Z} CARR.PUSCHMCSDist.BinX.BinY.BinZ}$$

;

wherein, the *AvgULMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the *X*, the MCS table is the *Y*, and the MCS index is the Z; and the *efficiency_Z^Y* is the spectral efficiency that the first PRB numbers corresponds to when the MCS table is the Y and the MCS index is the Z.

In a third aspect, provided is an air-interface performance evaluation apparatus, comprising a memory and a processor, wherein the memory is configured to store computer-executable instructions, and the processor is connected to the memory via a bus; and when the air-interface performance evaluation apparatus is operated, the processor executes the computer-executable instructions stored in the memory, such that the air-interface performance evaluation apparatus performs the air-interface performance evaluation method according to the first aspect.

The air-interface performance evaluation apparatus may be a network device, or may be an apparatus as a part in the network device, for example, a chip system in the network device. The chip system is configured to support the network device in implementing the functions involved in the first aspect and any possible implementation of the first aspect, such as, acquiring, determining, and sending data and/or information involved in the air-interface performance evaluation method described above. The chip system comprises a chip, and may also comprise other discrete devices or circuit structures.

In a fourth aspect, a computer-readable storage medium is provided, the computer-readable storage medium comprising computer-executable instructions, wherein, when the computer-executable instructions run on a computer, the computer is enabled to perform the air-interface performance evaluation method described in the first aspect.

In a fifth aspect, a computer program product is further provided, the computer program product comprising computer instructions, wherein when the computer instructions run on the air-interface performance evaluation apparatus, the air-interface performance evaluation apparatus is enabled to perform the air-interface performance evaluation method as described in the first aspect.

It should be noted that, the above computer instructions may be stored as a whole or in part on the computer-readable storage medium. The computer-readable storage medium may be encapsulated together with the processor of the air-interface performance evaluation apparatus, or may be encapsulated separately from the processor of the air-interface performance evaluation apparatus, which is not limited in the embodiments of the present application.

For descriptions of the second aspect, the third aspect, the fourth aspect, and the fifth aspect in the present application, reference may be made to the detailed description of the first aspect.

In the embodiments of the present application, a name of the air-interface performance evaluation apparatus will not constitute a limitation on a device or a function module, and in actual implementations, the device or the function module may appear with another name. For example, a receiving unit may also be referred to as a receiving module, a receiver, or the like. As long as the functions of the individual devices or functional modules are similar to those of the present application, they will fall into the scope of the claims of the present application and their equivalents.

The technical solutions provided in the present application at least achieve the following advantageous effects: Based on any one of the foregoing aspects, the present application provides an air-interface performance evaluation method, as follows: an electronic device may acquire a plurality of first physical resource block (PRB) numbers of a target cell within a first preset period, wherein the first PRB number is a number of PRBs in the target cell that are jointly determined on the basis of RANK and a MCS index in a MCS table. Then, the electronic device may determine, on the basis of each of the first PRB numbers and a spectral efficiency that each of the first PRB numbers corresponds to, a target air-interface efficiency of the target cell within the first preset period. The spectral efficiency that the first PRB numbers corresponds to is determined on the basis of a first MCS table and a first MCS index corresponding to the first PRB number.

It can be seen from the above that, the electronic device may obtain the PRB number that corresponds to the RANK and the MCS index in the MCS table within the first preset period. Since a relationship between the MCS index and the spectral efficiency is included in each MCS table, the electronic device may determine the spectral efficiency that each of the first PRB numbers corresponds to on the basis of the first MCS table and the first MCS index corresponding to each PRB number, such that the electronic device may determine the target air-interface efficiency on the basis of each of the first PRB numbers and the spectral efficiency that each of the first PRB numbers corresponds to. Since the first PRB number is the PRB number under a MASSIVE MIMO scenario, the first PRB number encompasses capabilities of all RANKs in the target cell. In this way, the electronic device may jointly determine the target air-interface efficiency of the target cell within the first preset period on the basis of the first PRB number and the spectral efficiency, and indicate the air-interface performance of the cell using the target air-interface efficiency.

In addition, because the first PRB number may be the PRB number under a MU-MIMO scenario in the entire target cell, the target air-interface efficiency may be an air-interface efficiency in the MU-MIMO scenario. In addition, since the first PRB number is the number of PRBs of the target cell within the first preset period, the target air-interface efficiency may be used to indicate an air-interface efficiency of the entire target cell.

For advantageous effects of the first aspect, the second aspect, the third aspect, the fourth aspect, and the fifth aspect in the present application, reference may be made to analysis of the foregoing advantageous effects, and the details thereof will not be described herein again.

**Brief Description of the Drawings**

FIG. 1 is a schematic structural diagram of an air-interface performance evaluation system according to an embodiment of the present application;
FIG. 2 is a schematic diagram of a hardware structure of an air-interface performance evaluation apparatus according to an embodiment of the present application;
FIG. 3 is a schematic flowchart 1 of an air-interface performance evaluation method according to an embodiment of the present application;
FIG. 4 is a schematic flowchart 2 of an air-interface performance evaluation method according to an embodiment of the present application;
FIG. 5 is a schematic flowchart 3 of an air-interface performance evaluation method according to an embodiment of the present application;
FIG. 6 is a schematic flowchart 4 of an air-interface performance evaluation method according to an embodiment of the present application;
FIG. 7 is a schematic flowchart 5 of an air-interface performance evaluation method according to an embodiment of the present application;

FIG. 8 is a schematic flowchart 6 of an air-interface performance evaluation method according to an embodiment of the present application;

FIG. 9 is a schematic flowchart 7 of an air-interface performance evaluation method 7 according to an embodiment of the present application;

FIG. 10 is a schematic flowchart 8 of an air-interface performance evaluation method according to an embodiment of the present application; and

FIG. 11 is a schematic structural diagram of an air-interface performance evaluation apparatus according to an embodiment of the present application.

## Detailed Description of the Embodiments

The following content clearly and completely describes the technical solutions in the embodiments of the present application with reference to the accompanying drawings in the embodiments of the present application. Obviously, the described embodiments are only a part of the embodiments of the present application, rather than all of the embodiments. All other embodiments obtained by those of ordinary skills in the art on the basis of the embodiments in the present application without making creative efforts fall within the protection scope of the present application.

It should be noted that in embodiments of the present application, words such as "exemplary" or "for example" are used to indicate an example, an illustration, or a description. Any embodiment or design solution described as "exemplary" or with "for example" in the embodiments of the present application should not be construed as being more preferred or advantageous than other embodiments or design solutions. Rather, use of words such as "exemplary" or "for example" is intended to present related concepts in a particular manner.

In order to clearly describe the technical solutions of the embodiments of the present application, in the embodiments of the present application, words such as "first" and "second" are used to distinguish between same items or similar items whose functions and effects are substantially the same, and those skilled in the art may understand that words such as "first" and "second" are not limited in quantity and execution order.

As described in the background, air-interface efficiency of a cell is a very important indicator, and plays a critical role in network optimization. In a 5G network, there are multiple measurement methods for the air-interface efficiency of a cell.

At present, since a MASSIVE MIMO technology is introduced into a 5G network, existing measurement methods have been unable to be applied to a MASSIVE MIMO scenario, and therefore, a measurement method applicable to the air-interface efficiency in a MASSIVE MIMO scenario is urgently needed.

After the MASSIVE MIMO technology is introduced into the 5G network, the air-interface capacity of a cell is greatly improved, and air-interface resources at wireless side of the 5G network is expanded from two-dimensions, i.e., the time domain and the frequency domain previously, to three-dimensions, i.e., the time domain, the frequency domain and the space domain. As such, the impact of space domain on the air-interface efficiency should also be considered during measurement of the air-interface efficiency of the cell.

In addition, the MASSIVE MIMO technology includes Single User MIMO (SU-MIMO) and Multi-User MIMO (MU-MIMO). Therefore, when the air-interface efficiency of the cell is evaluated, it is also necessary to consider the air-interface efficiency in two scenarios: SU-MIMO and MU-MIMO.

The following content is a method for evaluating the air-interface efficiency of a cell in the prior art:

(1) In the 28.552 Protocol of the 3rd Generation Partnership Project (3GPP), Channel quality indication (CQI) related measurement reported by a user equipment (UE) is defined, which is wideband CQI distribution measurement, CARR.WBCQIDist.BinX.BinY.BinZ. According to the method, the downlink air-interface performance is evaluated through CQI distribution reported by the UE, and the specific method is as follows: each time the UE reports a measurement result of a wideband CQI, the numbers in terms of index value (BinX), RANK (Number of rank space division multiplexing streams) value (BinY), and Table (BinZ) that correspond to the CQI reported by the UE this time are accumulated.

According to the method, CQI reporting times by the UE are counted through distinguishing dimensions of tables, dimensions of RANKs and dimensions of indexes. However, as a result obtained by counting in the method is relatively discrete, the CQI of an entire cell cannot be normalized, so that the result can only indicate air-interface performance corresponding to each UE, rather than air-interface performance corresponding to the entire cell. In addition, when different RANKs correspond to a same CQI index, their related spectral efficiencies are different, and therefore the method can only be applied to an SU-MIMO scenario and is unable to evaluate air-interface performance of the entire cell in an MU-MIMO scenario.

(2) In the 28.552 Protocol of 3GPP, MCS-related measurement of uplink and downlink scheduled by a base station is defined, which is called as PDSCH channel/ PUSCH channel MCS distribution measurement, CARR.PDSCHMCSDist.BinX.BinY.BinZ/ CARR.PUSCHMCSDist.BinX.BinY.BinZ. The method implements measurement through MCS distribution of uplink and downlink actually scheduled by the base station. The specific method is as follows: each time the base station allocates an MCS level to a PRB on a downlink PDSCH channel/ uplink PUSCH channel for scheduling, the number of PRBs are accumulated according to the allocated MCS index, that is, accumulating the numbers in terms of index value (BinX), RANK (BinY) and Table (BinZ) that correspond to the scheduling MCS on the downlink PDSCH channel/uplink PUSCH channel.

In addition, in the MU-MIMO scenario, a single PRB may be scheduled to UEs of a plurality of different RANKs and a plurality of different MCSs, and in this case, the single PRB is repeatedly counted into the number of PRBs corresponding to each scheduled RANK and each scheduled MCS.

According to the method, MCS reporting times are counted through distinguishing dimensions of tables, dimensions of RANKs and dimensions of indexes. However, as a result obtained by counting in this method is relatively discrete, it is unable to indicate air-interface performance corresponding to the entire cell. In addition, when different RANKs correspond to a same MCS index, their related spectral efficiencies are different, and therefore, the method can only be applied to an SU-MIMO scenario, and is unable to evaluate air-interface performance of the entire cell in an MU-MIMO scenario.

(3) An indicator of "average air-interface efficiency per UE in a cell" is defined in the 28.552 Protocol of 3GPP. The indicator is calculated on the basis of CQI distribution, in which spectrum efficiencies corresponding to CQIs of different RANKs in different tables are summarized and averaged so that the air-interface efficiency index per UE at the cell level is obtained.

Because the CQI is an indicator reported by the UE, this indicator is applicable to air-interface performance evaluation only in a downlink scenario, and cannot be applied to air-interface performance evaluation in an uplink scenario. In addition, this indicator can only be applied to calculation of single-user air-interface efficiency in the SU-MIMO scenario, rather than calculation of air-interface efficiency in the MU-MIMO scenario.

For ease of understanding, terminologies related to the present application are firstly described in the following.

(1)MASSIVE MIMO

MASSIVE MIMO may also be referred to as a massive multi-antenna technology, and is a key technology of a 5G network. By adding antennas, network space resources are increased, thereby improving overall network capacity. MASSIVE MIMO is classified in terms of the number of users scheduled on a single time-frequency resource and can be divided into SU-MIMO and MU-MIMO.

SU-MIMO, also be referred to as single-user multiple-input multiple-output, improves network efficiency of quality inspection of a UE and a base station in a multi-link simultaneous transmission manner, but multiple parallel data streams occupying a same time-frequency resource can only be scheduled to one UE, thereby improving a data transmission rate of the UE of one single user.

MU-MIMO, also be referred to as multi-user multiple-input multiple-output, is added with a multi-user communication mechanism on the basis of SU-MIMO. A plurality of UEs share a same time-frequency resource in a spatial division manner, so that an additional diversity gain for multiple users can be obtained in a spatial domain multi-user scheduling manner. At the same time slot and within the same frequency band, the base station may communicate with a plurality of UEs. Therefore, MU-MIMO can make full use of radio bandwidths, and perform simultaneous data transmission with a network side in a case of multiple UE accessing, thereby increasing a space division capability and improving network resource utilization.

(2) MCS and efficiency

A network device may provide numbers of PRBs scheduled by different MCSs reported by different RANKs on uplink and downlink of a cell within a measured time period. In the 38.214 Protocol of 3GPP, four MCS tables are defined for downlink, 2 MCS tables are defined for uplink, in which different tables represent different modulation and coding strategies, and the name and function of each table are:
Downlink PDSCH channel: PDSCH MCS table 1, a related network of which enables 64 quadrature amplitude modulation (QAM), PDSCH MCS table 2, a related network of which enables 256 QAM, PDSCH MCS table 3, a related network of which enables ultra-reliable low-latency communications (URLLC), and PDSCH MCS table 4, a related network of which enables 1024 QAM.

Uplink PUSCH channel: PUSCH MCS table 1, a related network of which enables 64 QAM, PUSCH MCS table 2, a related network of which enables URLLC.

Each MCS table includes a relationship between an MCS index and efficiency, and Table 1 shows a correspondence in the downlink PDSCH MCS table 1.

Table 1

| Table 5.1.3.1-1: MCS index table 1 for PDSCH | | | |
|---|---|---|---|
| MCS index $I_{mcs}$ | Modulation Order $Q_m$ | Target code Rate R*[1024] | Spectral efficiency |
| 0 | 2 | 120 | 0.2344 |
| 1 | 2 | 157 | 0.3066 |
| 2 | 2 | 193 | 0.3770 |
| 3 | 2 | 251 | 0.3770 |
| 4 | 2 | 308 | 0.4902 |
| 5 | 2 | 379 | 0.6016 |
| 6 | 2 | 449 | 0.7402 |
| 7 | 2 | 526 | 0.8770 |
| 8 | 2 | 602 | 1.0273 |
| 9 | 2 | 679 | 1.1758 |
| 10 | 4 | 340 | 1.3262 |
| 11 | 4 | 378 | 1.3281 |
| 12 | 4 | 434 | 1.4766 |
| 13 | 4 | 490 | 1.6953 |
| 14 | 4 | 553 | 1.9141 |
| 15 | 4 | 616 | 2.1602 |
| 16 | 4 | 658 | 2.4063 |
| 17 | 6 | 438 | 2.5703 |
| 18 | 6 | 466 | 2.5664 |
| 19 | 6 | 517 | 2.7305 |
| 20 | 6 | 567 | 3.0293 |
| 21 | 6 | 616 | 3.3223 |
| 22 | 6 | 666 | 3.6094 |
| 23 | 6 | 719 | 3.9023 |
| 24 | 6 | 772 | 4.5234 |
| 25 | 6 | 822 | 4.8164 |
| 26 | 6 | 873 | 5.1152 |
| 27 | 6 | 910 | 5.3320 |
| 28 | 6 | 948 | 5.5547 |
| 29 | 2 | reserved | |
| 30 | 4 | reserved | |
| 31 | 6 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

Table 2 shows a correspondence in the downlink PDSCH MCS table 2.

Table 2

| Table 5.1.3.1-2: MCS index table 2 for PDSCH | | | |
|---|---|---|---|
| MCS index $I_{mcs}$ | Modulation Order $Q_m$ | Target code Rate R*[1024] | Spectral efficiency |
| 0 | 2 | 120 | 0.2344 |
| 1 | 2 | 193 | 0.3770 |
| 2 | 2 | 308 | 0.6016 |
| 3 | 2 | 449 | 0.8770 |
| 4 | 4 | 602 | 1.1758 |
| 5 | 4 | 378 | 1.4766 |
| 6 | 4 | 434 | 1.6953 |
| 7 | 4 | 490 | 1.9141 |
| 8 | 4 | 553 | 2.1602 |
| 9 | 4 | 616 | 2.4063 |
| 10 | 4 | 658 | 2.5703 |
| 11 | 6 | 466 | 2.7305 |
| 12 | 6 | 517 | 3.0293 |
| 13 | 6 | 567 | 3.3223 |
| 14 | 6 | 616 | 3.6094 |
| 15 | 6 | 666 | 3.9023 |
| 16 | 6 | 719 | 4.2129 |
| 17 | 6 | 772 | 4.5234 |
| 18 | 6 | 822 | 4.8164 |
| 19 | 6 | 873 | 5.1152 |
| 20 | 8 | 682.5 | 5.3320 |
| 21 | 8 | 711 | 5.5547 |
| 22 | 8 | 754 | 5.8906 |
| 23 | 8 | 797 | 6.2266 |
| 24 | 8 | 841 | 6.5703 |
| 25 | 8 | 885 | 6.9141 |
| 26 | 8 | 916.5 | 7.1602 |
| 27 | 8 | 948 | 7.4063 |
| 28 | 2 | reserved | |
| 29 | 4 | reserved | |
| 30 | 6 | reserved | |
| 31 | 8 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

Table 3 shows a correspondence in the downlink PDSCH MCS table 3.

Table 3

| Table 5.1.3.1-3: MCS index table 3 for PDSCH | | | |
|---|---|---|---|
| MCS index $I_{mcs}$ | Modulation Order $Q_m$ | Target code Rate R*[1024] | Spectral efficiency |
| 0 | 2 | 30 | 0.0586 |
| 1 | 2 | 40 | 0.0781 |
| 2 | 2 | 50 | 0.0977 |
| 3 | 2 | 64 | 0.1250 |
| 4 | 2 | 78 | 0.1523 |
| 5 | 2 | 99 | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 1.0273 |
| 14 | 2 | 602 | 1.1758 |
| 15 | 4 | 340 | 1.3281 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 6 | 438 | 2.5664 |
| 22 | 6 | 466 | 2.7305 |
| 23 | 6 | 517 | 3.0293 |
| 24 | 6 | 567 | 3.3223 |
| 25 | 6 | 616 | 3.6094 |
| 26 | 6 | 666 | 3.9023 |
| 27 | 6 | 719 | 4.2129 |
| 28 | 6 | 772 | 4.5234 |
| 29 | 2 | reserved | |
| 30 | 4 | reserved | |
| 31 | 6 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

Table 4 shows a correspondence in the downlink PDSCH MCS table 4.

Table 4

| Table 5.1.3.1-4: MCS index table 4 for PDSCH | | | |
|---|---|---|---|
| MCS index $I_{mcs}$ | Modulation Order $Q_m$ | Target code Rate R*[1024] | Spectral efficiency |
| 0 | 2 | 120 | 0.2344 |
| 1 | 2 | 193 | 0.3770 |
| 2 | 2 | 449 | 0.8770 |
| 3 | 4 | 378 | 1.4766 |
| 4 | 4 | 490 | 1.9141 |
| 5 | 4 | 616 | 2.4063 |
| 6 | 6 | 466 | 2.7305 |
| 7 | 6 | 517 | 3.0293 |
| 8 | 6 | 567 | 3.3223 |
| 9 | 6 | 616 | 3.6094 |
| 10 | 6 | 666 | 3.9023 |
| 11 | 6 | 719 | 4.2129 |
| 12 | 6 | 772 | 4.5234 |
| 13 | 6 | 822 | 4.8164 |
| 14 | 6 | 873 | 5.1152 |
| 15 | 8 | 682.5 | 5.3320 |
| 16 | 8 | 711 | 5.5547 |
| 17 | 8 | 754 | 5.8906 |
| 18 | 8 | 797 | 6.2266 |
| 19 | 8 | 841 | 6.5703 |
| 20 | 8 | 885 | 6.9141 |
| 21 | 8 | 916.5 | 7.1602 |
| 22 | 8 | 948 | 7.4063 |
| 23 | 10 | 805.5 | 7.8662 |
| 24 | 10 | 853 | 8.3301 |
| 25 | 10 | 900.5 | 8.7939 |
| 26 | 10 | 948 | 9.2578 |
| 27 | 2 | reserved | |
| 28 | 4 | reserved | |
| 29 | 6 | reserved | |
| 30 | 8 | reserved | |
| 31 | 10 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

Table 5 shows a correspondence between in the uplink PUSCH MCS table 1.

Table 5

| Table 6.1.4.1-1: MCS index table for PUSCH with transform precoding and 64QAM | | | |
|---|---|---|---|
| MCS index $I_{mcs}$ | Modulation Order $Q_m$ | Target code Rate R*[1024] | Spectral efficiency |
| 0 | q | 240/q | 0.2344 |
| 1 | q | 314/q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

Table 6 shows a correspondence in the uplink PUSCH MCS table 2.

Table 6

| Table 6.1.4.1-2: MCS index table 2 for PUSCH with transform precoding and 64QAM | | | |
| --- | --- | --- | --- |
| MCS index $I_{mcs}$ | Modulation Order $Q_m$ | Target code Rate R*[1024] | Spectral efficiency |
| 0 | q | 60/q | 0.0586 |
| 1 | q | 80/q | 0.0781 |
| 2 | q | 100/q | 0.0977 |
| 3 | q | 128/q | 0.1250 |
| 4 | q | 156/q | 0.1523 |
| 5 | q | 198/q | 0.1934 |
| 6 | 2 | 120 | 0.2344 |
| 7 | 2 | 157 | 0.3066 |
| 8 | 2 | 193 | 0.3770 |
| 9 | 2 | 251 | 0.4902 |
| 10 | 2 | 308 | 0.6016 |
| 11 | 2 | 379 | 0.7402 |
| 12 | 2 | 449 | 0.8770 |
| 13 | 2 | 526 | 0.0273 |
| 14 | 2 | 602 | 1.1758 |
| 15 | 2 | 679 | 1.3262 |
| 16 | 4 | 378 | 1.4766 |
| 17 | 4 | 434 | 1.6953 |
| 18 | 4 | 490 | 1.9141 |
| 19 | 4 | 553 | 2.1602 |
| 20 | 4 | 616 | 2.4063 |
| 21 | 4 | 658 | 2.5703 |
| 22 | 4 | 699 | 2.7305 |
| 23 | 4 | 772 | 3.0156 |
| 24 | 6 | 567 | 3.3223 |
| 25 | 6 | 616 | 3.6094 |
| 26 | 6 | 666 | 3.9023 |
| 27 | 6 | 772 | 4.5234 |
| 28 | q | reserved | |
| 29 | 2 | reserved | |
| 30 | 4 | reserved | |
| 31 | 6 | reserved | |

wherein MCS index $I_{mcs}$ represents an MCS index, Modulation Order $Q_m$ represents a modulation order, Target code Rate R*[1024] is a target code rate, and spectral efficiency is spectral efficiency.

For the foregoing problem, the present application provides an air-interface performance evaluation method, including: acquiring, by an electronic device, a plurality of first physical resource block, PRB, numbers of a target cell within a first preset period. A first PRB number is a number of PRBs in the target cell and that are jointly determined on the basis of RANK and a MCS index in a MCS table. Then, the electronic device may determine a target air-interface efficiency of the target cell within the first preset period on the basis of each first PRB number and the spectral efficiency corresponding to each first PRB number. The spectral efficiency that the first PRB numbers corresponds to is determined on the basis of a first MCS table and a first MCS index corresponding to the first PRB number.

It can be learned from the foregoing that the electronic device may acquire the RANK and the number of PRBs corresponding to the MCS index in the MCS table within the first preset period. Because each MCS table includes a relationship between an MCS index and spectral efficiency, the electronic device can determine, on the basis of the first MCS table and the first MCS index corresponding to each PRB number, the spectral efficiency corresponding to each first PRB number, so that the electronic device can determine the target air-interface efficiency on the basis of each first PRB number and the spectral efficiency corresponding to each first PRB number. As the first PRB number is the number of PRBs in a MASSIVE MIMO scenario, the first PRB number encompasses capabilities of all RANKs in the target cell. In this way, the electronic device can jointly determine the target air-interface efficiency of the target cell within the first preset period on the basis of the first PRB number and the spectral efficiency, and indicate air-interface performance of the cell on the basis of the target air-interface efficiency.

In addition, as the first PRB number may be the number of PRBs in a MU-MIMO scenario in the entire target cell, the target air-interface efficiency may be the air-interface efficiency in the MU-MIMO scenario. In addition, as the first PRB number is the number of PRBs of the target cell within the first preset period, air-interface efficiency of the entire target cell can be represented by the target air-interface efficiency.

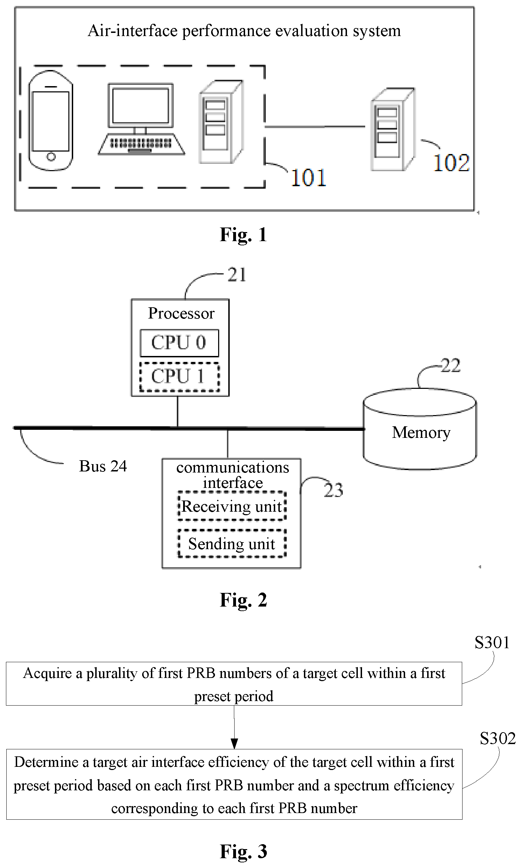

The air-interface performance evaluation method is applicable to an air-interface performance evaluation system. FIG. 1 shows a structure of the air-interface performance evaluation system. As shown in FIG. 1, the air-interface performance evaluation system includes an electronic device 101 and a network management device 102.

The electronic device 101 is communicatively connected to the network management device 102.

In the present application, the electronic device 101 may acquire a first PRB number of a target cell within a first preset period from the network management device 102, and determine corresponding spectral efficiency on the basis of the first PRB number. Then, the electronic device 101 may determine target air-interface efficiency through the first PRB number and the corresponding spectral efficiency. The network management device 102 is configured to send the first PRB number to the electronic device 101.

Optionally, the electronic device 101 may be a network management device 102 (or an OMC server), a base station, or a terminal or a server, which is not limited to embodiments of the present application.

Optionally, the terminal mentioned above may be a device providing voice and/or data connectivity to a user, a handheld device having a wireless connection function, or any other processing devices connected to a wireless modem. The terminal may communicate with one or more core networks through a radio access network(s) (RAN). The terminal may be a mobile terminal, such as a mobile phone (or referred to as a "cellular" phone) and a computer having the mobile terminal, or may be a portable, pocket-sized, handheld, computer built-in, or vehicle-mounted mobile device that exchanges language and/or data with the radio access network(s), for example, a mobile phone, a tablet computer, a notebook computer, a netbook, or a personal digital assistant (PDA).

The server mentioned above may be a server in a server cluster (consisting of a plurality of servers), a chip in the server, or a system-on-chip in the server, and may be implemented by a virtual machine (VM) deployed on a physical machine, which is not limited to embodiments of the present application.

The basic hardware structure of the electronic device 101 includes elements included in an air-interface performance evaluation apparatus shown in FIG. 2. A hardware structure of the electronic device 101 describes below by taking the air-interface performance evaluation apparatus shown in FIG. 2 as an example.

FIG. 2 is a schematic diagram of a hardware structure of an air-interface performance evaluation apparatus according to an embodiment of the present application. The air-interface performance evaluation apparatus includes a processor 21, a memory 22, a communication interface 23, and a bus 24. The processor 21, the memory 22, and the communication interface 23 may be connected via the bus 24.

The processor 21 is a control center of the air-interface performance evaluation apparatus, and it may be in a form of one processor, or may be a general term of a plurality of processing elements. For example, the processor 21 may be a general-purpose central processing unit (CPU), or may be other general-purpose processor. The general-purpose processor may be a microprocessor or any conventional processor.

In an embodiment, the processor 21 may include one or more CPUs, for example, a CPU 0 and a CPU 1 shown in FIG. 2.

The memory 22 may be a read-only memory (ROM) or other type of static storage device that can store static information and instructions; a random access memory (RAM) or other type of dynamic storage device that can store information and instructions; an electrically erasable programmable read-only memory (EEPROM), a magnetic disk storage medium or other magnetic storage device; or any other medium that can be used to carry or store desired program codes in a form of an instruction or a data structure and that can be accessed by a computer, but is not limited thereto.

In a possible implementation, the memory 22 may exist independently of the processor 21, and the memory 22 may be connected to the processor 21 via the bus 24, and is configured to store an instruction or program codes. When invoking and executing the instruction or the program codes stored in the memory 22, the processor 21 can implement the air-interface performance evaluation method provided by the following embodiments of the present application.

In embodiments of the present application, for the electronic device 101, software programs stored in the memory 22 are different, so functions implemented by the electronic device 101 are different. The functions performed by the devices will be described in conjunction with the following flowcharts.

In another possible implementation, the memory 22 may alternatively be integrated with the processor 21.

The communication interface 23 is configured to connect the air-interface performance evaluation apparatus to another device by a communication network, wherein the communication network may be an Ethernet, a radio access network, a wireless local area network (WLAN), and the like. The communication interface 23 may include a receiving unit configured to receive data and a sending unit configured to send data.

The bus 24 may be an industry standard architecture (ISA) bus, a peripheral component interconnect (PCI) bus, an extended industry standard architecture (EISA) bus, and the like. The bus may be classified into an address bus, a data bus, a control bus, and the like. For ease of representation, only one thick line is used for representation of buses in FIG. 2, but it does not mean that there is only one bus or one type of bus.

It should be noted that the structure shown in FIG. 2 does not constitute a limitation on the air-interface performance evaluation apparatus. Rather, in addition to the components shown in FIG. 2, the air-interface performance evaluation apparatus may include more or fewer components than those shown in the figure, have a combination of some components, or have a different layout of components.

The following content describes in detail the air-interface performance evaluation method provided by embodiments of the present application with reference to the accompanying drawings.

An air-interface performance evaluation method provided by embodiments of the present application is applied to the electronic device 101 in the air-interface performance evaluation system shown in FIG. 1. As shown in FIG. 3, the air-interface performance evaluation method provided by embodiments of the present application includes:

S301: The electronic device acquires a plurality of first PRB numbers of a target cell within a first preset period.

The first PRB number is a number of PRBs in the target cell and that are jointly determined on the basis of RANK and a MCS index in a MCS table.

Optionally, there may be a plurality of RANKs, values of the RANKs may be 1-8. There may be a plurality of MCS tables, wherein there may be 4 MCS tables corresponding to downlink channels, and there may be 2 MCS tables corresponding to uplink channels. There may be a plurality of MCS indexes, and a value range may be 0-31.

Specifically, the electronic device may acquire, from the network management device, performance management (PM) data of an O domain (i.e., operation support system) of the target cell within the first preset period, and acquire, from the performance management (PM) data, a first PRB number that is jointly determined through the RANK, the MCS table, and the MCS index. The RANK represents a value of spatial multiplexing streams by which the PRB is invoked, the MCS table represents an MCS mode (for example, 64 QAM or 256 QAM) that is determined for the PRB by the base station, and the MCS index is used to represent a modulation order and a target code rate in the MCS mode determined by the base station for the PRB. Therefore, the first PRB number is the number of PRBs that meet three dimensions, i.e., the RANK, the MCS table, and the MCS index.

It should be understood that the MCS table and the first MCS table in embodiments of the present application both are indexes on name of the MCS tables.

Optionally, the first preset period may be a preset time period, for example, fifteen minutes.

S302: The electronic device determines target air-interface efficiency of the target cell within the first preset period on the basis of each of the first PRB numbers and a spectral efficiency that each of the first PRB numbers corresponds to.

The spectral efficiency that the first PRB numbers corresponds to is determined on the basis of the first MCS table and the first MCS index that the first PRB number corresponds to.

It should be understood that the first PRB number is a number of PRBs corresponding to first RANK, the first MCS table, and the first MCS index.

Specifically, as the first PRB number is jointly determined on the basis of the RANK, the MCS table, and the MCS index, the electronic device can determine the first MCS table that the first PRB number corresponds to and the first MCS index that the first PRB number corresponds to. Then, the electronic device can determine the spectral efficiency that the first PRB number corresponds to on the basis of a relationship between a MCS index and spectral efficiency in a MCS table (i.e., the correspondence in above Table 1 to Table 6), the first MCS table, and the first MCS index,.

Then, the electronic device can determine the target air-interface efficiency on the basis of each of the first PRB numbers and the spectral efficiency corresponding to each of the PRB numbers. As the first PRB number is the number of PRBs under a MASSIVE MIMO scenario, the first PRB number encompasses capabilities of all RANKs in the target cell. In this way, the electronic device can jointly determine the target air-interface efficiency of the target cell within the first preset period on the basis of the first PRB number and the spectral efficiency, and indicate air-interface performance of the cell by using the target air-interface efficiency.

In addition, as the first PRB number may be the number of PRBs under a MU-MIMO scenario in the entire target cell, the target air-interface efficiency may refer to air-interface efficiency under the MU-MIMO scenario. In addition, since the first PRB number is the number of PRBs of the target cell within the first preset period, air-interface efficiency of the entire target cell can be indicated using the target air-interface efficiency.

Optionally, the electronic device may determine a product of an individual first PRB number and a spectral efficiency of the individual first PRB number as the target air-interface efficiency, which is not limited to the embodiment of the present application.

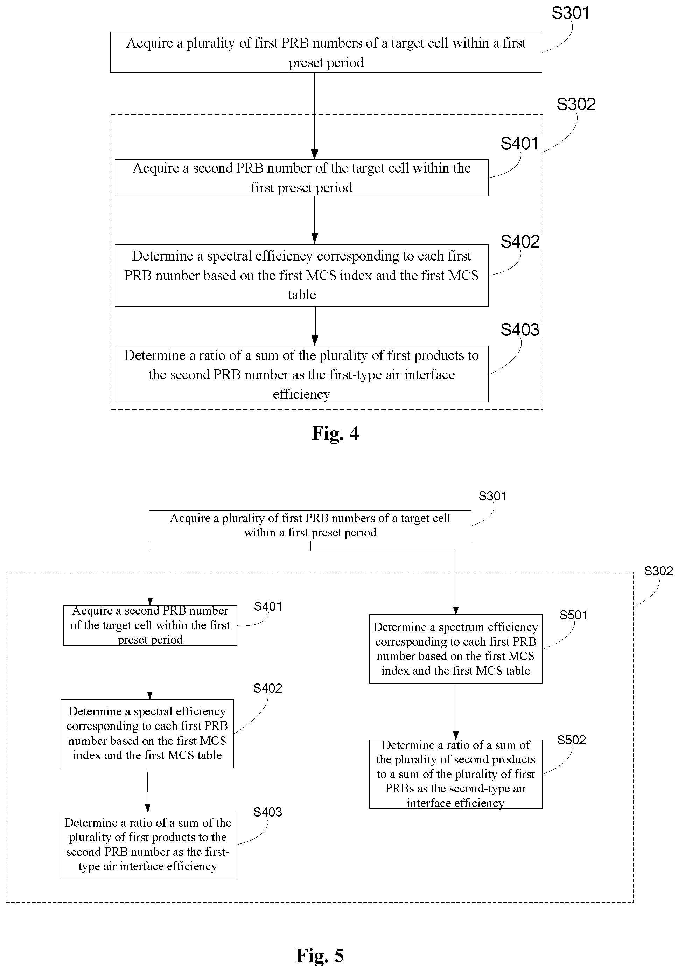

In some embodiments, with reference to FIG. 3, as shown in FIG. 4, the target air-interface efficiency includes a first-type air-interface efficiency; and the foregoing S302 in which the electronic device determines the target air-interface efficiency of the target cell within the first preset period on the basis of each of the first PRB numbers and the spectral efficiency corresponding to each of the first PRB numbers specifically includes:

S401: The electronic device acquires a second PRB number of the target cell within the first preset period.

The second PRB number is a number of PRBs occupied by channels in the target cell.

Specifically, the electronic device may acquire, from the network management device, O-domain PM data of the target cell within the first preset period, and acquire, from the acquired O-domain PM data, the number of PRBs occupied by the channels of the target cell within the first preset period, i.e., the second PRB number.

It should be noted that because the second PRB number is a number of real PRBs occupied by the channels, the first PRB number is a number of PRBs corresponding to the target RNAK, the target MCS table, and the target MCS index, and one PRB may be scheduled via different RANKs in the MU-MIMO scenario, one same PRB may thus be repeatedly counted into different PRB numbers. In this way, in the MU-MIMO scenario, the first PRB number is greater than the second PRB number, while in the SU-MIMO scenario, the first PRB number equals the second PRB number.

S402: The electronic device determines a spectral efficiency that each of the first PRB numbers corresponds to on the basis of the first MCS index and the first MCS table.

Specifically, the electronic device may determine the spectral efficiency that the first PRB number corresponds to on the basis of the correspondence between the MCS index and the spectral efficiency in the MCS table (i.e., the correspondence in above Table 1 to Table 6), the first MCS table, and the first MCS index,.

S403: The electronic device determines a ratio of a sum of the plurality of first products to the second PRB number as the first-type air-interface efficiency.

Any one of the first products is a product of the first PRB number, the first RANK corresponding to the first PRB number, and the spectral efficiency that the first PRB numbers corresponds to.

Specifically, the electronic device may further determine RANK that the first PRB number corresponds to. Then, the electronic device may determine a product of the RANK corresponding to the first PRB number, the spectral efficiency that the first PRB numbers corresponds to, and the first PRB number as the first product. Then, because the first PRB number is any one of the plurality of first PRB numbers, there are a plurality of first products. Subsequently, the electronic device may determine a ratio of a sum of the plurality of first products to the second PRB number as the first-type air-interface efficiency.

As the first PRB number is the number of PRBs under a MU-MIMO scenario and a product of the RANK and the first PRB number can represent space division capability of the target cell, the electronic device can determine the first-type air-interface efficiency of the target cell through the RANK, the first PRB number, the spectral efficiency, and the second PRB number. Therefore, the calculated first-type air-interface efficiency includes the space division capability of the target cell, and may further represent an average air-interface efficiency of the entire target cell in the MU-MIMO scenario.

In a possible implementation, a channel of the target cell is a downlink PDSCH channel or an uplink PUSCH channel; and in the case that the channel of the target cell is the downlink PDSCH channel, the first-type air-interface efficiency should meet the following formula:

$$AvgDLMcsEfficiency\_Cell = \frac{\sum_{X,Y,Z} X * CARR.PDSCHMCSDist.BinX.BinY.BinZ * efficiency_Z^Y}{M1(T)}$$ ; wherein the *AvgDLMcsEffi-*

*ciency_Cell* is the first-type air-interface efficiency. *X* is a value of RANK corresponding to the first PRB number. *Y* is a value of an MCS table corresponding to the first PRB number; and *Z* is a value of an MCS index corresponding to the first PRB number. *CARR.PDSCHMCSDist.BinX.BinY.BinZ* is the first PRB number determined when the RANK is *X*, the MCS table is *Y*, and the MCS index is *Z*. $efficiency_Z^Y$ is the spectral efficiency that the first PRB number corresponds to when the first MCS table is *Y* and the first MCS index is *Z*. *M*1(*T*) is the second PRB number.

It should be understood that, in the item *CARR.PDSCHMCSDist.BinX.BinY.BinZ* , *X* represents the first RANK corresponding to the first PRB number, with a value range of 1-8, *Y* represents the first MCS table (or a table index, i.e., Table 1 to Table 4) corresponding to the first PRB number, with a value range of 1-4, *Z* represents the first MCS index corresponding to the first PRB number, with a value range of 0-31. *AvgDLMcsEfficiency_Cell* may represent the first-type air-interface efficiency of the downlink PDSCH channel of the target cell within the first preset period.

Through the above formula, the electronic device can perform normalization on the plurality of MCS tables to calculate the first-type air-interface efficiency of the entire target cell. In addition, because the first PRB number refers to a data source of a single terminal (or a single user) RANK, the present solution can implement that the air-interface efficiency under the MU-MIMO scenario is calculated through the data source of the single terminal RANK.

In a possible implementation, a channel of the target cell is a downlink PDSCH channel or an uplink PUSCH channel; in the case that the channel of the target cell is the uplink PUSCH channel, the first-type air-interface efficiency should meet the following formula:

$$AvgULMcsEfficiency\_Cell = \frac{\sum_{X,Y,Z} X * CARR.PUSCHMCSDist.BinX.BinY.BinZ * efficiency_Z^Y}{M1(T)};$$

wherein *AvgULMcsEfficiency_Cell* is the first-type air-interface efficiency; *X* is a value of RANK corresponding to the first PRB number; *Y* is a value of an MCS table corresponding to the first PRB number; *Z* is a value of an MCS index corresponding to the first PRB number; *CARR.PUSCHMCSDist.BinX.BinY.BinZ* is the first PRB number determined when the RANK is *X*, the MCS table is *Y*, and the MCS index is *Z*; $efficiency_Z^Y$ is the spectral efficiency that the first PRB number corresponds to when the first MCS table is *Y* and the first MCS index is *Z*; and *M1(T)* is the second PRB number.

It should be understood that, in the item *CARR.PUSCHMCSDist.BinX.BinY.BinZ*, *X* represents first RANK corresponding to the first PRB number, with a value range of 1-8, *Y* represents a first MCS table (or a table index, i.e., Table 1 to Table 2) corresponding to the first PRB number, with a value range of 1-2, *Z* represents a first MCS index corresponding to the first PRB number, with a value range of 0-31. *AvgDLMcsEfficiency_Cell* may represent the first-type air-interface efficiency of the uplink PUSCH channel of the target cell within the first preset period.

Through the above formula, the electronic device can perform normalization on the plurality of MCS tables to calculate the first-type air-interface efficiency of the entire target cell. In addition, because the first PRB number refers to a data source of a single terminal (or a single user) RANK, the present solution can implement that the air-interface efficiency in the MU-MIMO scenario is calculated through the data source of the single terminal RANK.

In some embodiments, with reference to FIG. 4, as shown in FIG. 5, the target air-interface efficiency includes a second-type air-interface efficiency; and the foregoing S302 in which the electronic device determines the target air-interface efficiency of the target cell within the first preset period on the basis of each of first PRB numbers and the spectral efficiency that each of the first PRB numbers corresponds to specifically includes:

S501: The electronic device determines a spectral efficiency that each first PRB number corresponds to on the basis of the first MCS index and the first MCS table.

Specifically, the electronic device may determine the spectral efficiency that the first PRB number corresponds to on the basis of the correspondence between the MCS index and the spectral efficiency in the MCS table (i.e., the correspondence in above Table 1 to Table 6), the first MCS table, and the first MCS index,.

S502: The electronic device determines a ratio of a sum of the plurality of second products to a sum of the plurality of first PRBs as the second-type air-interface efficiency.

Any one of the first products is a product of the second PRB number, the RANK corresponding to the first PRB number, and the spectral efficiency that the first PRB numbers corresponds to.

Specifically, the electronic device may determine a product of the RANK corresponding to the first PRB number, the spectral efficiency that the first PRB numbers corresponds to, and the first PRB number as a second product. Then, because there are a plurality of first PRB numbers, there are a plurality of second products. Subsequently, the electronic device may determine the ratio of the sum of the plurality of second products to the sum of the plurality of first PRBs as the second-type air-interface efficiency.

As the first PRB number is a number of PRBs under a MASSIVE MIMO scenario and a product of the RANK and the first PRB number can represent space division capability of the target cell, the electronic device can determine the second-type air-interface efficiency of the target cell by using the RANK, the first PRB number, and the spectral efficiency. Therefore, the calculated second-type air-interface efficiency includes the space division capability of the target cell. In addition, regardless of whether in a SU-MIMO scenario or a MU-MIMO scenario, the number of PRBs in the numerator and denominator of the formula are equal, such that the second-type air-interface efficiency may be used to represent the air-interface efficiency of a single terminal in the MASSIVE MIMO scenario.

In a possible implementation, a channel of the target cell is a downlink PDSCH channel or an uplink PUSCH channel. In the case that the channel of the target cell is the downlink PDSCH channel, the second-type air-interface efficiency meets the following formula:

$$AvgDLMcsEfficiency\_UE = \frac{\sum_{X,Y,Z} X * CARR.PDSCHMCSDist.BinX.BinY.BinZ * efficiency_Z^Y}{\sum_{X,Y,Z} CARR.PDSCHMCSDist.BinX.BinY.BinZ};$$

where *AvgDLMcsEfficiency_UE* is the second-type air-interface efficiency; *X* is a value of RANK corresponding to the first PRB number; *Y* is a value of an MCS table corresponding to the first PRB number; *Z* is a value of an MCS index corresponding to the first PRB number; *CARR.PDSCHMCSDist.BinX.BinY.BinZ* is the first PRB number determined when the RANK is X, the MCS table is Y, and the MCS index is Z; and *efficiency$_Z^Y$* is the spectral efficiency that the first PRB number corresponds to when the first MCS table is Y and the first MCS index is Z.

It should be understood that, in the item *CARR.PDSCHMCSDist.BinX.BinY.BinZ*, X represents the first RANK corresponding to the first PRB number, with a value range of 1-8, Y represents the first MCS table (or a table index, i.e., Table 1 to Table 4) corresponding to the first PRB number, with a value range of 1-4, and Z represents the first MCS index corresponding to the first PRB number, with a value range of 0-31. *AvgDLMcsEfficiency_UE* may represent the second-type air-interface efficiency of the downlink PDSCH channel of the target cell within the first preset period.

By using the foregoing formula, the electronic device can perform normalization on the plurality of MCS tables, so as to calculate and represent the second-type air-interface efficiency of the entire target cell. In addition, regardless of whether in the SU-MIMO scenario or the MU-MIMO scenario, the number of PRBs in the numerator and denominator of the formula are equal, such that the second-type air-interface efficiency may be used to represent the air-interface efficiency of a single terminal in the MASSIVE MIMO scenario.

In a possible implementation, a channel of the target cell is a downlink PDSCH channel or an uplink PUSCH channel. In the case that the channel of the target cell is the uplink PUSCH channel, the second-type air-interface efficiency meets the following formula:

$$AvgULMcsEfficiency\_UE = \frac{\sum_{X,Y,Z} X * CARR.PUSCHMCSDist.BinX.BinY.BinZ * efficiency_Z^Y}{\sum_{X,Y,Z} CARR.PUSCHMCSDist.BinX.BinY.BinZ} \; ;$$

where *AvgULMcsEfficiency_UE* is the second-type air-interface efficiency; *X* is a value of RANK corresponding to the first PRB number; *Y* is a value of an MCS table corresponding to the first PRB number; *Z* is a value of an MCS index corresponding to the first PRB number; *CARR.PUSCHMCSDist.BinX.BinY.BinZ* is the first PRB number determined when the RANK is X, the MCS table is Y, and the MCS index is Z; and *efficiency$_Z^Y$* is the spectral efficiency that the first PRB number corresponds to when the first MCS table is Y and the first MCS index is Z.

It should be understood that, in the item *CARR.PUSCHMCSDist.BinX.BinY.BinZ*, X represents the RANK corresponding to the first PRB number, with a value range of 1-8, Y represents an MCS table (or a table index, i.e. Table 1 to Table 2) corresponding to the first PRB number, with a value range of 1-2, Z represents an MCS index corresponding to the first PRB number, with a value range of 0-31. *AvgDLMcsEfficiency_Cell* may represent the second-type air-interface efficiency of the uplink PUSCH channel of the target cell within the first preset period.

By using the foregoing formula, the electronic device can perform normalization on the plurality of MCS tables, so as to calculate and represent the second-type air-interface efficiency of the entire target cell. In addition, regardless of whether in the SU-MIMO scenario or the MU-MIMO scenario, the number of PRBs in the numerator and denominator of the formula are equal, such that the second-type air-interface efficiency may be used to represent the air-interface efficiency of a single terminal in the MASSIVE MIMO scenario.

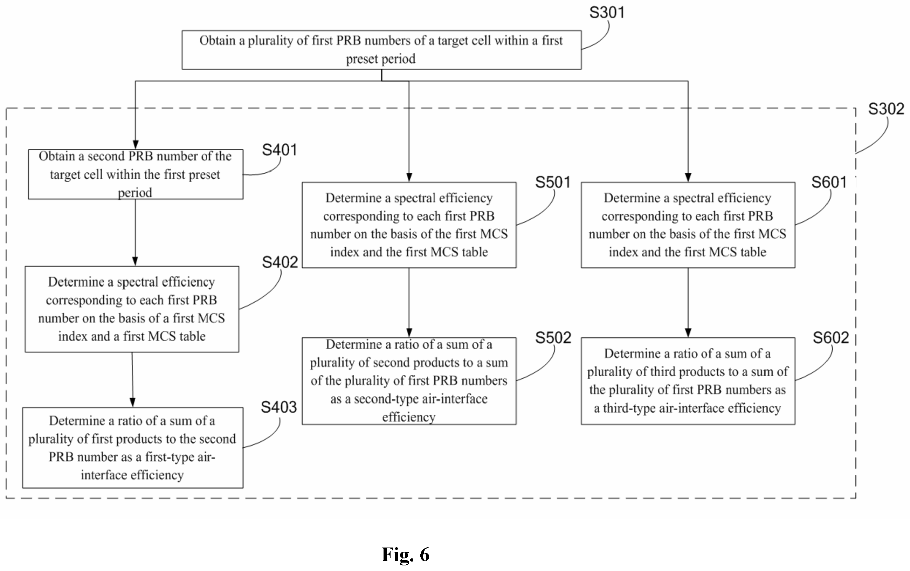

In some embodiments, with reference to Fig. 5, as shown in Fig. 6, the target air-interface efficiency includes a third-type air-interface efficiency. In the foregoing S302 in which the electronic device determines a target air-interface efficiency of the target cell within the first preset period on the basis of each of the first PRB numbers and a spectral efficiency that each of the first PRB numbers corresponds to, specifically includes:
S601: determining, by the electronic device, the spectral efficiency that each of the first PRB numbers corresponds to on the basis of the first MCS index and the first MCS table.

Specifically, the electronic device may determine the spectral efficiency that the first PRB number corresponds to on the basis of the correspondence between the MCS index and the spectral efficiency in the MCS table (i.e., the correspondence in Table 1 to Table 6), the first MCS table, and the first MCS index,.

S602: determining, by the electronic device, a ratio of a sum of the plurality of third products to a sum of the plurality of first PRBs as the third-type air-interface efficiency.

Any one of the third products is a product of the first PRB number and the RANK corresponding to the first PRB number. The first PRB number is any one of the plurality of first PRB numbers.

Specifically, the electronic device may determine a product of the spectral efficiency that the first PRB number corresponds to and the first PRB number as the third product. Then, because there are a plurality of first PRB numbers, there are a plurality of third products. Subsequently, the electronic device may determine the ratio of the sum of the plurality of third products to the sum of the plurality of first PRB numbers as the third-type air-interface efficiency.

As the first PRB number is a number of PRBs in the MASSIVE MIMO scenario, the electronic device may determine the third-type air-interface efficiency of the target cell on the basis of the first PRB number and the spectral efficiency. Because the third-type air-interface efficiency takes no account of the influence of RANK, the third-type air-interface efficiency thus may represent a time-frequency two-dimensional air-interface efficiency. In this way, the electronic device may determine the time-frequency two-dimensional air-interface efficiency on the basis of the first PRB number and the spectral efficiency under the MASSIVE MIMO scenario.

In a possible implementation, a channel of the target cell is a downlink PDSCH channel or an uplink PUSCH channel. When the channel of the target cell is the downlink PDSCH channel, the third-type air-interface efficiency meets the following formula:

$$AvgDLMcsEfficiency = \frac{\sum_{X,Y,Z} CARR.PDSCHMCSDist.BinX.BinY.BinZ * efficiency_Z^Y}{\sum_{X,Y,Z} CARR.PDSCHMCSDist.BinX.BinY.BinZ};$$

where *AvgDLMcsEfficiency* is the third-type air-interface efficiency; *X* is a value of RANK corresponding to the first PRB number; *Y* is a value of an MCS table corresponding to the first PRB number; *Z* is a value of an MCS index corresponding to the first PRB number; *CARR.PDSCHMCSDist.BinX.BinY.BinZ* is the first PRB number determined when the RANK is X, the MCS table is Y, and the MCS index is Z; and *efficiency_Z^Y* is the spectral efficiency that the first PRB number corresponds to when the first MCS table is Y and the first MCS index is Z.

It should be understood that in the item *CARR.PDSCHMCSDist.BinX.BinY.BinZ*, X represents the RANK corresponding to the first PRB number, with a value range of 1-8, Y represents an MCS table (or a table index, i.e., Table 1 to Table 4) corresponding to the first PRB number, with a value range of 1-4, Z represents an MCS index corresponding to the first PRB number, with a value range of 0-31. *AvgDLMcsEfficiency_UE* may represent the third-type air-interface efficiency of the downlink PDSCH channel of the target cell within the first preset period.

By using the foregoing formula, the electronic device can perform normalization on the plurality of MCS tables, so as to calculate and represent the third-type air-interface efficiency of the entire target cell. In addition, because the third-type air-interface efficiency takes no account of the influence of RANK, the third-type air-interface efficiency may represent a time-frequency two-dimensional air-interface efficiency. In this way, the electronic device may determine the time-frequency two-dimensional air-interface efficiency on the basis of the first PRB number and the spectral efficiency under the MASSIVE MIMO scenario.

In a possible implementation, a channel of the target cell is a downlink PDSCH channel or an uplink PUSCH channel. When the channel of the target cell is the uplink PUSCH channel, the third-type air-interface efficiency meets the following formula:

$$AvgULMcsEfficiency = \frac{\sum_{X,Y,Z} CARR.PUSCHMCSDist.BinX.BinY.BinZ * efficiency_{MCS_Z}^{TableY}}{\sum_{X,Y,Z} CARR.PUSCHMCSDist.BinX.BinY.BinZ};$$

where *AvgULMcsEfficiency* is the third-type air-interface efficiency; *X* is a value of RANK corresponding to the first PRB number; *Y* is a value of an MCS table corresponding to the first PRB number; *Z* is a value of an MCS index corresponding to the first PRB number; *CARR.PUSCHMCSDist.BinX.BinY.BinZ* is the first PRB number determined when the RANK is X, the MCS table is Y, and the MCS index is Z; and *efficiency_Z^Y* is the spectral efficiency that the first PRB number corresponds to when the first MCS table is Y and the first MCS index is Z.

It should be understood that, in *CARR.PUSCHMCSDist.BinX.BinY.BinZ*, X represents the RANK corresponding to the first PRB number, with a value range of 1-8, Y represents an MCS table (or a table index, i.e., Table 1 to Table 2) corresponding to the first PRB number, with a value range of 1-2, and Z represents an MCS index corresponding to the first PRB number, with a value range of 0-31. *AvgULMcsEfficiency* may represent the third-type air-interface efficiency of the uplink PUSCH channel of the target cell within the first preset period.

By using the foregoing formula, the electronic device can perform normalization on the plurality of MCS tables, so as to calculate and represent the third-type air-interface efficiency of the entire target cell. In addition, because the third-type air-interface efficiency takes no account of the influence of RANK, the third-type air-interface efficiency may represent a time-frequency two-dimensional air-interface efficiency. In this way, the electronic device may determine the time-frequency two-dimensional air-interface efficiency on the basis of the first PRB number and the spectral efficiency in the MASSIVE MIMO scenario.

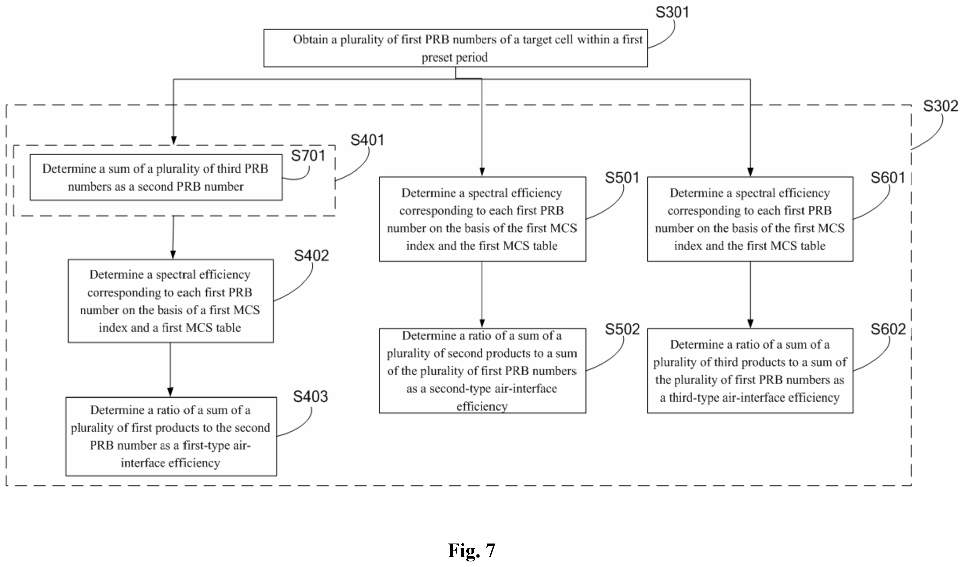

In some embodiments, with reference to Fig. 6, as shown in Fig. 7, the foregoing S401 in which the electronic device acquires a second PRB number of the target cell within the first preset period specifically includes:

S701: determining, by the electronic device, a sum of the plurality of third PRB numbers as a second PRB number.

Any one of the third PRB numbers is a number of PRBs occupied by each scheduling of a channel of the target cell within the first preset period.

Specifically, within the first preset period, multiple scheduling instances are performed on the channel of the target cell, and the PRB number occupied by each scheduling of the channel is varied, such that the electronic device may acquire the PRB number occupied by each scheduling of the channel and determine same as the third PRB number. Then, the electronic device may accumulate the PRB numbers occupied by multiple scheduling instances of the channel to obtain the second PRB number. That is, the electronic device determines the sum of the third PRB numbers as the second PRB number.

It should be understood that the electronic device may acquire, from O-domain PM data, the PRB number occupied by each scheduling. The channel of the target cell is an uplink channel or a downlink channel.

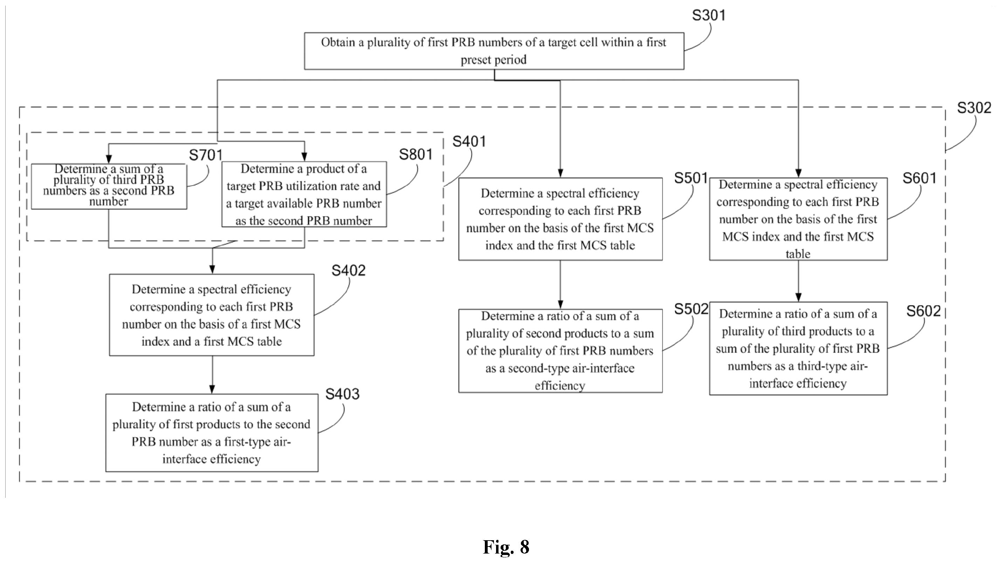

In some embodiments, with reference to Fig. 7, as shown in Fig. 8, the foregoing S401 in which the electronic device acquires a second PRB number of the target cell within the first preset period specifically includes:
S801: determining, by the electronic device, a product of a target PRB utilization rate and a target available PRB number as the second PRB number.

The target PRB utilization rate is a PRB utilization rate of the channel of the target cell within the first preset period. The target available PRB number is an accumulated value of the available PRB numbers for the channel of the target cell during multiple scheduling instances within the first preset period.

Specifically, during each scheduling of the channel, there are a plurality of available PRBs for scheduling by the channel. However, during each scheduling, the channel usually does not occupy all of the available PRBs, such that the electronic device can acquire a PRB utilization rate regarding how many PRBs being occupied by the channel of the target cell within the first preset period as the target PRB utilization rate. Then, the electronic device may acquire an available PRB number during each scheduling of the channel within the first preset period, and determine an accumulated value of available PRB numbers for the channel of the target cell during multiple scheduling instances as the target available PRB number. Subsequently, the electronic device may determine a product of the target PRB utilization rate and the target available PRB number as the second PRB number.

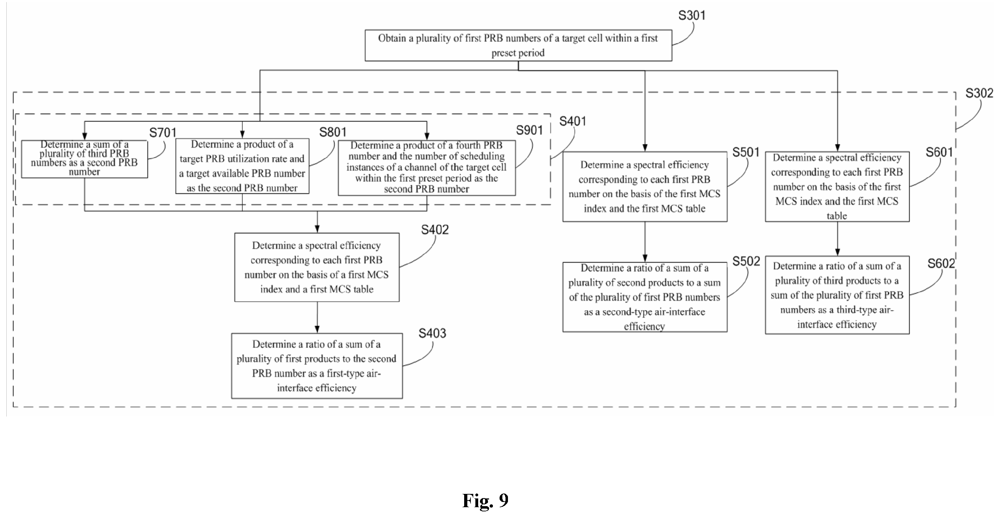

In some embodiments, with reference to Fig. 8, as shown in Fig. 9, the foregoing S401 in which the electronic device acquires a second PRB number of the target cell within the first preset period specifically includes:
S901: determining, by the electronic device, a product of a fourth PRB number and a number of scheduling instances of a channel of the target cell within the first preset period as the second PRB number.

The fourth PRB number is an even of PRB numbers that are occupied during multiple scheduling instances of the channel of the target cell within the first preset period.

Specifically, the electronic device may acquire an average PRB number occupied per scheduling during multiple scheduling instances of the channel of the target cell within the first preset period, and determine same as the fourth PRB number. Then, the electronic device may acquire the number of scheduling instances of the channel of the target cell within the first preset period, and determine a product of the fourth PRB number and the number of scheduling instances as the second PRB number.

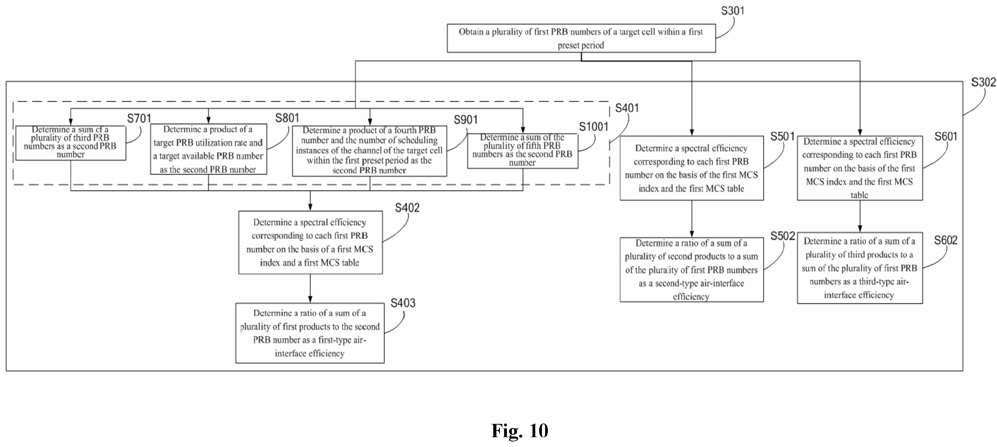

In some embodiments, with reference to Fig. 9, as shown in Fig. 10, the foregoing S401 in which the electronic device acquires a second PRB number of the target cell within the first preset period specifically includes:
S1001: determining, by the electronic device, a sum of a plurality of fifth PRB numbers as the second PRB number.

Any one of the fifth PRB numbers is an accumulated value of PRB numbers on a plurality of space division layers during scheduling of the channel of the target cell at every preset moment within the first preset period.

Specifically, during scheduling of the channel of the target cell, as PRBs are divided to a plurality of space division layers for scheduling, each space division layer includes a plurality of related PRBs at every individual moment. In this case, the electronic device may divide the first preset period into a plurality of preset moments, acquire, at each preset moment, the accumulated value of PRB numbers on the plurality of space division layers during scheduling of the channel of the target cell, and determine same as the fifth PRB number. As there are a plurality of preset moments, there are also a plurality of fifth PRB numbers. Then, the electronic device may determine a sum of the plurality of fifth PRB numbers as the second PRB number.

The foregoing mainly describes the solutions provided in the embodiments of the present application from the perspective of methods. To implement the foregoing functions, corresponding hardware structures and/or software modules for performing the functions are included. A person skilled in the art should be easily aware that in conjunction with the units and algorithm steps of the examples described in the embodiments disclosed herein, the present application can be implemented in a form of hardware or a combination of hardware and computer software. Whether a certain function is performed by hardware or computer software driven hardware depends on specific application and design constraints of the technical solution. A person skilled in the art may use different methods to implement the described functions for each particular application, but such implementation shall not be considered beyond the scope of the present application.

In the embodiment of the present application, division of functional modules may be performed, according to the foregoing exemplified method, on an air-interface performance evaluation apparatus. For example, each functional module may be divided corresponding to each function, or two or more functions may be integrated into one processing module. The foregoing integrated module may be implemented in a form of hardware, or may be implemented in a form of a software function module. Optionally, division of the modules in the embodiment of the present application is illustrative, is merely logical function division, and may be other division in an actual implementation.

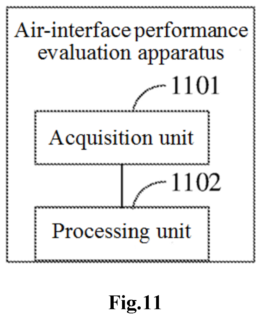

Fig. 11 is a schematic structural diagram of an air-interface performance evaluation apparatus provided by an embodiment of the present application. The air-interface performance evaluation apparatus may be configured to perform the air-interface performance evaluation method shown in any one of Fig. 3 to Fig. 10. The air-interface performance evaluation apparatus shown in Fig 11 includes an acquisition unit 1101 and a processing unit 1102.

The acquisition unit 1101 is configured to acquire a plurality of first physical resource block (PRB) numbers of a target cell within a first preset period. The first PRB number is a number of PRBs in the target cell that are jointly determined on the basis of RANK and an MCS index in an MCS table. For example, with reference to Fig. 3, the acquisition unit 1101 is configured to perform S301.

The processing unit 1102 is configured to determine a target air-interface efficiency of the target cell within the first preset period on the basis of each of the first PRB numbers and a spectral efficiency that each of the first PRB numbers corresponds to. The spectral efficiency that the first PRB numbers corresponds to is determined on the basis of a first MCS table and a first MCS index that correspond to the first PRB number. For example, with reference to Fig. 3, the processing unit 1102 is configured to perform S302.

Optionally, the target air-interface efficiency includes a first-type air-interface efficiency. The processing unit 1102 is specifically configured to: acquire a second PRB number of the target cell within the first preset period, where the second PRB number is a number of PRBs occupied by a channel in the target cell. For example, with reference to Fig. 4, the processing unit 1102 is configured to perform S401.

A spectral efficiency that each of the first PRB numbers corresponds to is determined on the basis of the first MCS index and the first MCS table. For example, with reference to Fig. 4, the processing unit 1102 is configured to perform S402.

A ratio of a sum of a plurality of first products to the second PRB number is determined as the first-type air-interface efficiency, where any one of the first products is a product of the first PRB number, first RANK corresponding to the first PRB number, and the spectral efficiency that the first PRB numbers corresponds to. For example, with reference to Fig. 4, the processing unit 1102 is configured to perform S403.

Optionally, the target air-interface efficiency includes a second-type air-interface efficiency. The processing unit 1102 is specifically configured to:

determine a spectral efficiency that each of the first PRB numbers corresponds to on the basis of the first MCS index and the first MCS table. For example, with reference to Fig. 5, the processing unit 1102 is configured to perform S501; determine a ratio of a sum of a plurality of second products to a sum of the plurality of first PRB numbers as the second-type air-interface efficiency, where any one of the second products is a product of the first PRB number, first RANK corresponding to the first PRB number, and the spectral efficiency that the first PRB numbers corresponds to. For example, with reference to Fig. 5, the processing unit 1102 is configured to perform S502.

Optionally, the target air-interface efficiency includes a third-type air-interface efficiency. The processing unit 1102 is specifically configured to:

determine a spectral efficiency that each of the first PRB numbers corresponds to on the basis of the first MCS index and the first MCS table. For example, with reference to Fig. 6, the processing unit 1102 is configured to perform S601; determine a ratio of a sum of a plurality of third products to a sum of the plurality of first PRB numbers as the third-type air-interface efficiency, where any one of the third products is a product of the first PRB number and the spectral efficiency that the first PRB numbers corresponds to. For example, with reference to Fig. 6, the processing unit 1102 is configured to perform S602.

Optionally, the acquisition unit 1101 is specifically configured to:
determine a sum of a plurality of third PRB numbers as the second PRB number, where any one of the third PRB numbers is a number of PRBs occupied by each scheduling of the channel of the target cell within the first preset period. For example, with reference to Fig. 7, the acquisition unit 1101 is configured to perform S701.

Optionally, the acquisition unit 1101 is specifically configured to:
determine a product of a target PRB utilization rate and a target available PRB number as the second PRB number, where the target PRB utilization rate is a PRB utilization rate of the channel of the target cell within the first preset period; and the target available PRB number is an accumulated value of available PRB numbers for the channel of the target cell during multiple scheduling instances within the first preset period. For example, with reference to Fig. 8, the acquisition unit 1101 is configured to perform S801.

Optionally, the acquisition unit 1101 is specifically configured to: determine a product of a fourth PRB number and a number of scheduling instances of the channel of the target cell within the first preset period as the second PRB number, where the fourth PRB number is an even of PRB numbers that are occupied during multiple scheduling instances of the channel of the target cell within the first preset period. For example, with reference to Fig. 9, the acquisition unit 1101 is configured to perform S901.

Optionally, determine a sum of a plurality of fifth PRB numbers as the second PRB number, where any one of the fifth PRB numbers is an accumulated value of PRB numbers on a plurality of space division layers during scheduling of the channel of the target cell at every preset moment within the first preset period.

Optionally, a channel of the target cell is a downlink PDSCH channel or an uplink PUSCH channel. When the channel of the target cell is the downlink PDSCH channel, the first-type air-interface efficiency meets the following formula:

$$AvgDLMcsEfficiency\_Cell = \frac{\sum_{X,Y,Z} X * CARR.PDSCHMCSDist.BinX.BinY.BinZ * efficiency_Z^Y}{M1(T)};$$

where *AvgDLMcsEfficiency_Cell* is the first-type air-interface efficiency; *X* is a value of RANK corresponding to the first PRB number; *Y* is a value of an MCS table corresponding to the first PRB number; *Z* is a value of an MCS index corresponding to the first PRB number; *CARR.PDSCHMCSDist.BinX.BinY.BinZ* is a first PRB number determined when the RANK is X, the MCS table is Y, and the MCS index is Z; *efficiency_Z^Y* is a spectral efficiency that the first PRB number corresponds to when the first MCS table is Y and the first MCS index is Z; and *M1(T)* is the second PRB number.

Optionally, a channel of the target cell is a downlink PDSCH channel or an uplink PUSCH channel. When the channel of the target cell is the uplink PUSCH channel, the first-type air-interface efficiency meets the following formula:

$$AvgULMcsEfficiency\_Cell = \frac{\sum_{X,Y,Z} X * CARR.PUSCHMCSDist.BinX.BinY.BinZ * efficiency_Z^Y}{M1(T)};$$

where *AvgULMcsEfficiency_Cell* is the first-type air-interface efficiency; *X* is a value of RANK corresponding to the first PRB number; *Y* is a value of an MCS table corresponding to the first PRB number; *Z* is a value of an MCS index corresponding to the first PRB number; *CARR.PUSCHMCSDist.BinX.BinY.BinZ* is a first PRB number determined when the RANK is X, the MCS table is Y, and the MCS index is Z; $efficiency_Z^Y$ is a spectral efficiency that the first PRB number corresponds to when the first MCS table is Y and the first MCS index is Z; and *M1(T)* is the second PRB number.

Optionally, a channel of the target cell is a downlink PDSCH channel or an uplink PUSCH channel. When the channel of the target cell is the downlink PDSCH channel, the second-type air-interface efficiency should meet the following formula:

$$AvgDLMcsEfficiency\_UE = \frac{\sum_{X,Y,Z} X * CARR.PDSCHMCSDist.BinX.BinY.BinZ * efficiency_Z^Y}{\sum_{X,Y,Z} CARR.PDSCHMCSDist.BinX.BinY.BinZ};$$

where *AvgDLMcsEfficiency_UE* is the second-type air-interface efficiency; *X* is a value of RANK corresponding to the first PRB number; Y is a value of an MCS table corresponding to the first PRB number; Z is a value of an MCS index corresponding to the first PRB number; *CARR.PDSCHMCSDist.BinX.BinY.BinZ* is a first PRB number determined when the RANK is X, the MCS table is Y, and the MCS index is Z; and $efficiency_Z^Y$ is a spectral efficiency that the first PRB number corresponds to when the first MCS table is Y and the first MCS index is Z.

Optionally, a channel of the target cell is a downlink PDSCH channel or an uplink PUSCH channel. When the channel of the target cell is the uplink PUSCH channel, the second-type air-interface efficiency meets the following formula:

$$AvgULMcsEfficiency\_UE = \frac{\sum_{X,Y,Z} X * CARR.PUSCHMCSDist.BinX.BinY.BinZ * efficiency_Z^Y}{\sum_{X,Y,Z} CARR.PUSCHMCSDist.BinX.BinY.BinZ};$$

where *AvgULMcsEfficiency_UE* is the second-type air-interface efficiency; *X* is a value of RANK corresponding to the first PRB number; *Y* is a value of an MCS table corresponding to the first PRB number; *Z* is a value of an MCS index corresponding to the first PRB number; *CARR.PUSCHMCSDist.BinX.BinY.BinZ* is a first PRB number determined when the RANK is X, the MCS table is Y, and the MCS index is Z; and $efficiency_Z^Y$ is a spectral efficiency that the first PRB number corresponds to when the first MCS table is Y and the first MCS index is Z.

Optionally, the channel of the target cell is a downlink PDSCH channel or an uplink PUSCH channel. When the channel of the target cell is the downlink PDSCH channel, the third-type air-interface efficiency should meet the following formula:

$$AvgDLMcsEfficiency = \frac{\sum_{X,Y,Z} CARR.PDSCHMCSDist.BinX.BinY.BinZ * efficiency_Z^Y}{\sum_{X,Y,Z} CARR.PDSCHMCSDist.BinX.BinY.BinZ};$$

where *AvgDLMcsEfficiency* is the third-type air-interface efficiency; *X* is a value of RANK corresponding to the first PRB number; *Y* is a value of an MCS table corresponding to the first PRB number; *Z* is a value of an MCS index corresponding to the first PRB number; *CARR.PDSCHMCSDist.BinX.BinY.BinZ* is a first PRB number determined when the RANK is X, the MCS table is Y, and the MCS index is Z; and $efficiency_Z^Y$ is a spectral efficiency that the first PRB number corresponds to when the first MCS table is Y and the first MCS index is Z.

Optionally, a channel of the target cell is a downlink PDSCH channel or an uplink PUSCH channel. When the channel of the target cell is the uplink PUSCH channel, the third-type air-interface efficiency meets the following formula:

$$AvgULMcsEfficiency = \frac{\sum_{X,Y,Z} CARR.PUSCHMCSDist.BinX.BinY.BinZ * efficiency_Z^Y}{\sum_{X,Y,Z} CARR.PUSCHMCSDist.BinX.BinY.BinZ};$$

where *AvgULMcsEfficiency* is the third-type air-interface efficiency; *X* is a value of RANK corresponding to the first PRB number; Y is a value of an MCS table corresponding to the first PRB number; Z is a value of an MCS index corresponding to the first PRB number; *CARR.PUSCHMCSDist.BinX.BinY.BinZ* is a first PRB number determined when the RANK is X, the MCS table is Y, and the MCS index is Z; and $efficiency_Z^Y$ is a spectral efficiency that the first PRB number corresponds to when the first MCS table is Y and the first MCS index is Z.

An embodiment of the present application further provides a computer-readable storage medium. The computer-readable storage medium includes computer-executable instructions that, when executed on a computer, cause computer to perform the air-interface performance evaluation method provided in the foregoing embodiments.

An embodiment of the present application further provides a computer program. The computer program may be directly loaded into a memory and includes software code, and after being loaded and executed by a computer, can implement the air-interface performance evaluation method provided in the foregoing embodiments.

A person skilled in the art should be aware that in the foregoing one or more examples described above, the functions described in the present application may be implemented in hardware, software, firmware, or any combination thereof. When implemented in software, these functions may be stored in a computer-readable medium or transmitted as one or more instructions or code on the computer-readable medium. The computer-readable medium includes a computer-readable storage medium and a communication medium, where the communication medium includes any medium that enables a computer program to be transmitted from one place to another. The storage medium may be any available medium accessible to a general or dedicated computer.

Through the description of the foregoing implementations, a person skilled in the art may clearly understand that for the convenience and conciseness of description, only the division of the foregoing function modules is used as an example for description, and in actual application, the foregoing functions may be allocated to different functional modules for implementation as required, that is, an inner structure of an apparatus is divided into different function modules to implement all or some of the functions described above.

In several embodiments provided in the present application, it should be understood that the disclosed apparatus and method may be implemented in other ways. For example, the division of the modules or the units is simply a division in the logical function, and there may be other division ways in actual implementation. For example a plurality of units or components may be combined or integrated into another apparatus, or some features may be ignored or not executed. In addition, the displayed or discussed mutual couplings or direct couplings or communication connections may be implemented through some interfaces, and indirect couplings or communication connections between apparatuses or units may be implemented in an electrical, mechanical, or another form. The units described as separate parts may or may not be physically separate, and parts displayed as units may be one or more physical units, that is, the parts may be located in one place, or may be distributed on a plurality of different places. Some or all of the units may be selected according to an actual requirement to achieve objectives of solutions of embodiments.

In addition, functional units in the embodiments of the present application may be integrated into one processing unit, or each of the units may exist alone physically, or two or more units may be integrated into one unit. The foregoing integrated units may be implemented in a hardware form and may also be implemented in a form of software functional unit. When the integrated units are implemented in the form of a software functional unit and sold or used as an independent product, the integrated units may be stored in a readable storage medium. Based on such understanding, the technical solution of the embodiments of the present application essentially or the part contributing to the prior art or all or part of the technical solution may be embodied in the form of a software product, including that several instructions are used to make a device (which may be a single-chip microcomputer, a chip, etc.) or a processor execute all or part of the steps of the methods described in the various embodiments of the present application. The foregoing storage medium includes various media that may store program code, such as a USB flash disk, a mobile hard disk, a ROM, a RAM, a magnetic disk, or an optical disk.

The foregoing description is only a specific implementation of the present application, but the protection scope of the present application is not limited thereto. Any variations or substitutions easily conceivable by a person skilled in the art within the technical scope of the disclosure of the present application shall fall within the protection scope of the present application. Therefore, the protection scope of the present application shall be subjected to the protection scope of the claims.

**Claims**

1. An air-interface performance evaluation method, **characterized by** comprising:

   acquiring a plurality of first physical resource block, PRB, numbers of a target cell within a first preset period, wherein a first PRB number is a number of PRBs in the target cell that are jointly determined on the basis of number of rank space division multiplexing streams, RANK, and a modulation and coding scheme, MCS, index in a MCS table;
   and determining, on the basis of each of the first PRB numbers and a spectral efficiency that each of the first PRB numbers corresponds to, a target air-interface efficiency of the target cell within the first preset period, wherein the spectral efficiency that the first PRB numbers corresponds to is determined on the basis of a first MCS table and a first MCS index corresponding to the first PRB number.

2. The method of claim 1, **characterized in that**, the target air-interface efficiency comprises a first-type air-interface efficiency; and determining, on the basis of each of the first PRB numbers and a spectral efficiency that each of the first PRB numbers corresponds to, a target air-interface efficiency of the target cell within the first preset period comprises:

   acquiring a second PRB number of the target cell within the first preset period, wherein the second PRB number is a PRB number occupied by a channel in the target cell;
   determining, on the basis of the first MCS index and the first MCS table, the spectral efficiency that each of the first PRB numbers corresponds to; and
   determining a ratio of a sum of a plurality of first products to the second PRB number as the first-type air-interface efficiency, wherein any one of the first products is a product of the first PRB number, first RANK corresponding to the first PRB number, and the spectral efficiency that the first PRB numbers corresponds to.

3. The method of claim 2, **characterized in that**, acquiring a second PRB number of the target cell within the first preset period comprises:
   determining a sum of a plurality of third PRB numbers as the second PRB number, wherein any one of the third PRB numbers is a PRB number occupied by each scheduling of a channel of the target cell within the first preset period.

4. The method of claim 2, **characterized in that**, acquiring a second PRB number of the target cell within the first preset period comprises:
   determining a product of a target PRB utilization rate and a target available PRB number as the second PRB number, wherein the target PRB utilization rate is a PRB utilization rate of a channel of the target cell within the first preset period, and the target available PRB number is an accumulated value of available PRB numbers for the channel of the target cell during multiple scheduling instances within the first preset period.

5. The method of claim 2, **characterized in that**, acquiring a second PRB number of the target cell within the first preset period comprises:
   determining a product of a fourth PRB number and scheduling count, within the first preset period, of a channel of the target cell as the second PRB number, wherein the fourth PRB number is an even of PRB numbers that are occupied by the channel of the target cell during multiple scheduling instances within the first preset period.

6. The method of claim 2, **characterized in that**, acquiring a second PRB number of the target cell within the first preset period comprises:

determining a sum of a plurality of fifth PRB numbers as the second PRB number, wherein any one of the fifth PRB numbers is an accumulated value of PRB numbers on a plurality of space division layers during scheduling of a channel of the target cell at every preset moment within the first preset period.

7. The method of any one of claims 2-6, **characterized in that**, the channel of the target cell is a downlink PDSCH channel or an uplink PUSCH channel; and when the channel of the target cell is the downlink PDSCH channel, the first-type air-interface efficiency meets the following formula:

$$AvgDLMcsEfficiency\_Cell = \frac{\sum_{X,Y,Z} X * CARR.PDSCHMCSDist.BinX.BinY.BinZ * efficiency_Z^Y}{M1(T)} ;$$

wherein, the *AvgDLMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; the $efficiency_Z^Y$ is the spectral efficiency that the first PRB numbers corresponds to when the MCS table is the Y and the MCS index is the Z; and *M*1(*T*) is the second PRB number.

8. The method of any one of claim 2-6, **characterized in that**, the channel of the target cell is a downlink PDSCH channel or an uplink PUSCH channel; and when the channel of the target cell is the uplink PUSCH channel, the first-type air-interface efficiency meets the following formula:

$$AvgULMcsEfficiency\_Cell = \frac{\sum_{X,Y,Z} X * CARR.PUSCHMCSDist.BinX.BinY.BinZ * efficiency_Z^Y}{M1(T)} ;$$

wherein, the *AvgULMcsEfficiency_Cell* is the first-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; the $efficiency_Z^Y$ is the spectral efficiency that the first PRB numbers corresponds to when the MCS table is the Y and the MCS index is the Z; and *M*1(*T*) is the second PRB number.

9. The method of claim 1, **characterized in that**, the target air-interface efficiency comprises a second-type air-interface efficiency; and determining, on the basis of each of the first PRB numbers and a spectral efficiency that each of the first PRB numbers corresponds to, a target air-interface efficiency of the target cell within the first preset period comprises:

determining, on the basis of the first MCS index and the first MCS table, the spectral efficiency that each of the first PRB numbers corresponds to; and
determining a ratio of a sum of a plurality of second products to a sum of the plurality of first PRB numbers as the second-type air-interface efficiency, wherein any one of the second products is a product of the first PRB number, first RANK corresponding to the first PRB number, and the spectral efficiency that the first PRB numbers corresponds to.

10. The method of claim 9, **characterized in that**, the channel of the target cell is a downlink PDSCH channel or an uplink PUSCH channel; and when the channel of the target cell is the downlink PDSCH channel, the second-type air-interface efficiency meets the following formula:

$$AvgDLMcsEfficiency\_UE = \frac{\sum_{X,Y,Z} X * CARR.PDSCHMCSDist.BinX.BinY.BinZ * efficiency_Z^Y}{\sum_{X,Y,Z} CARR.PDSCHMCSDist.BinX.BinY.BinZ} ;$$

wherein, the *AvgDLMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; the $efficiency_Z^Y$ is the spectral efficiency that the first PRB numbers corresponds to when the MCS table is the Y and the MCS index is the Z.

11. The method of claim 9, **characterized in that**, the channel of the target cell is a downlink PDSCH channel or an uplink PUSCH channel; and when the channel of the target cell is the uplink PUSCH channel, the second-type air-interface efficiency meets the following formula:

$$AvgULMcsEfficiency\_UE = \frac{\sum_{X,Y,Z} X * CARR.PUSCHMCSDist.BinX.BinY.BinZ * efficiency_Z^Y}{\sum_{X,Y,Z} CARR.PUSCHMCSDist.BinX.BinY.BinZ};$$

wherein, the *AvgULMcsEfficiency_UE* is the second-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the X, the MCS table is the Y, and the MCS index is the Z; and the $efficiency_Z^Y$ is the spectral efficiency that the first PRB numbers corresponds to when the MCS table is the Y and the MCS index is the Z.

12. The method of claim 1, **characterized in that**, the target air-interface efficiency comprises a third-type air-interface efficiency; and determining, on the basis of each of the first PRB numbers and a spectral efficiency that each of the first PRB numbers corresponds to, a target air-interface efficiency of the target cell within the first preset period comprises:

   determining, on the basis of the first MCS index and the first MCS table, the spectral efficiency that each of the first PRB numbers corresponds to; and
   determining a ratio of a sum of a plurality of third products to a sum of the plurality of first PRB numbers as the third-type air-interface efficiency, wherein any one of the third products is a product of the first PRB number and the spectral efficiency that the first PRB numbers corresponds to.

13. The method of claim 12, **characterized in that**, the channel of the target cell is a downlink PDSCH channel or an uplink PUSCH channel; and when the channel of the target cell is the downlink PDSCH channel, the third-type air-interface efficiency meets the following formula:

$$AvgDLMcsEfficiency = \frac{\sum_{X,Y,Z} CARR.PDSCHMCSDist.BinX.BinY.BinZ * efficiency_Z^Y}{\sum_{X,Y,Z} CARR.PDSCHMCSDist.BinX.BinY.BinZ};$$

wherein, the *AvgDLMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PDSCHMCSDist.BinX.BinY.BinZ* is the first PRB number determined when the RANK is the X, the MCS table is the Y, and the MCS index is the Z; and the $efficiency_Z^Y$ is the spectral efficiency that the first PRB numbers corresponds to when the MCS table is the Y and the MCS index is the Z.

14. The method of claim 12, **characterized in that**, the channel of the target cell is a downlink PDSCH channel or an uplink PUSCH channel; and when the channel of the target cell is the uplink PUSCH channel, the third-type air-interface efficiency meets the following formula:

$$AvgULMcsEfficiency = \frac{\sum_{X,Y,Z} CARR.PUSCHMCSDist.BinX.BinY.BinZ * efficiency_Z^Y}{\sum_{X,Y,Z} CARR.PUSCHMCSDist.BinX.BinY.BinZ};$$

wherein, the *AvgULMcsEfficiency* is the third-type air-interface efficiency; the *X* is a value of RANK corresponding to the first PRB number; the *Y* is a value of an MCS table corresponding to the first PRB number; the *Z* is a value of an MCS index corresponding to the first PRB number; the *CARR.PUSCHMCSDist.BinX.BinY.BinZ* is the first PRB number determined when the RANK is the *X*, the MCS table is the *Y*, and the MCS index is the *Z*; and the $efficiency_Z^Y$ is the spectral efficiency that the first PRB numbers corresponds to when the MCS table is the Y and the MCS index is the Z.

15. An air-interface performance evaluation apparatus, **characterized by** comprising: an acquisition unit and a processing unit; wherein

the acquisition unit is configured to acquire a plurality of first physical resource block, PRB, numbers of a target cell within a first preset period, wherein a first PRB number is a number of PRBs in the target cell that are jointly determined on the basis of RANK and a MCS index in a MCS table; and

the processing unit is configured to determine, on the basis of each of the first PRB numbers and a spectral efficiency that each of the first PRB numbers corresponds to, a target air-interface efficiency of the target cell within the first preset period, wherein the spectral efficiency that the first PRB numbers corresponds to is determined on the basis of a first MCS table and a first MCS index corresponding to the first PRB number.

16. An air-interface performance evaluation apparatus, **characterized by** comprising a memory and a processor, wherein the memory is configured to store computer-executable instructions, and the processor is connected to the memory via a bus; and when the air-interface performance evaluation apparatus is operated, the processor executes the computer-executable instructions stored in the memory, such that the air-interface performance evaluation apparatus performs the air-interface performance evaluation method of any one of claims 1-14.

17. A computer-readable storage medium, **characterized in that**, the computer-readable storage medium comprises computer-executable instructions, wherein, when the computer-executable instructions run on a computer, the computer is enabled to perform the air-interface performance evaluation method of any one of claims 1-14.

Air-interface performance evaluation system

101

102

**Fig. 1**

21

Processor

CPU 0

CPU 1

22

Memory

Bus 24

communications interface

Receiving unit

Sending unit

23

**Fig. 2**

S301

Acquire a plurality of first PRB numbers of a target cell within a first preset period

S302

Determine a target air interface efficiency of the target cell within a first preset period based on each first PRB number and a spectrum efficiency corresponding to each first PRB number

**Fig. 3**

S301

Acquire a plurality of first PRB numbers of a target cell within a first preset period

S302

S401

Acquire a second PRB number of the target cell within the first preset period

S402

Determine a spectral efficiency corresponding to each first PRB number based on the first MCS index and the first MCS table

S403

Determine a ratio of a sum of the plurality of first products to the second PRB number as the first-type air interface efficiency

**Fig. 4**

S301

Acquire a plurality of first PRB numbers of a target cell within a first preset period

S302

S401

Acquire a second PRB number of the target cell within the first preset period

S402

Determine a spectral efficiency corresponding to each first PRB number based on the first MCS index and the first MCS table

S403

Determine a ratio of a sum of the plurality of first products to the second PRB number as the first-type air interface efficiency

S501

Determine a spectrum efficiency corresponding to each first PRB number based on the first MCS index and the first MCS table

S502

Determine a ratio of a sum of the plurality of second products to a sum of the plurality of first PRBs as the second-type air interface efficiency

**Fig. 5**

Fig. 6

EP 4 787 937 A1

Obtain a plurality of first PRB numbers of a target cell within a first preset period — S301

S302

Determine a sum of a plurality of third PRB numbers as a second PRB number — S701

S401

Determine a spectral efficiency corresponding to each first PRB number on the basis of the first MCS index and the first MCS table — S501

Determine a spectral efficiency corresponding to each first PRB number on the basis of the first MCS index and the first MCS table — S601

Determine a spectral efficiency corresponding to each first PRB number on the basis of a first MCS index and a first MCS table — S402

Determine a ratio of a sum of a plurality of second products to a sum of the plurality of first PRB numbers as a second-type air-interface efficiency — S502

Determine a ratio of a sum of a plurality of third products to a sum of the plurality of first PRB numbers as a third-type air-interface efficiency — S602

Determine a ratio of a sum of a plurality of first products to the second PRB number as a first-type air-interface efficiency — S403

**Fig. 7**

EP 4 787 937 A1

S301

Obtain a plurality of first PRB numbers of a target cell within a first preset period

S302

S401

S701
Determine a sum of a plurality of third PRB numbers as a second PRB number

S801
Determine a product of a target PRB utilization rate and a target available PRB number as the second PRB number

Determine a spectral efficiency corresponding to each first PRB number on the basis of the first MCS index and the first MCS table

S501

S601
Determine a spectral efficiency corresponding to each first PRB number on the basis of the first MCS index and the first MCS table

S402
Determine a spectral efficiency corresponding to each first PRB number on the basis of a first MCS index and a first MCS table

S502
Determine a ratio of a sum of a plurality of second products to a sum of the plurality of first PRB numbers as a second-type air-interface efficiency

S602
Determine a ratio of a sum of a plurality of third products to a sum of the plurality of first PRB numbers as a third-type air-interface efficiency

S403
Determine a ratio of a sum of a plurality of first products to the second PRB number as a first-type air-interface efficiency

**Fig. 8**

S301

Obtain a plurality of first PRB numbers of a target cell within a first preset period

S302

S701
Determine a sum of a plurality of third PRB numbers as a second PRB number

S801
Determine a product of a target PRB utilization rate and a target available PRB number as the second PRB number

S901
Determine a product of a fourth PRB number and the number of scheduling instances of a channel of the target cell within the first preset period as the second PRB number

S401

S402
Determine a spectral efficiency corresponding to each first PRB number on the basis of a first MCS index and a first MCS table

S403
Determine a ratio of a sum of a plurality of first products to the second PRB number as a first-type air-interface efficiency

S501
Determine a spectral efficiency corresponding to each first PRB number on the basis of the first MCS index and the first MCS table

S502
Determine a ratio of a sum of a plurality of second products to a sum of the plurality of first PRB numbers as a second-type air-interface efficiency

S601
Determine a spectral efficiency corresponding to each first PRB number on the basis of the first MCS index and the first MCS table

S602
Determine a ratio of a sum of a plurality of third products to a sum of the plurality of first PRB numbers as a third-type air-interface efficiency

**Fig. 9**

**Fig. 10**

**Fig.11**

# EP 4 787 937 A1

## INTERNATIONAL SEARCH REPORT

<table>
<tr><td colspan="2">International application No.</td></tr>
<tr><td colspan="2">PCT/CN2024/121509</td></tr>
</table>

**A.    CLASSIFICATION OF SUBJECT MATTER**

H04W 24/08(2009.01)i

According to International Patent Classification (IPC) or to both national classification and IPC

**B.    FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; VEN; EPTXT; USTXT; WOTXT; CNKI; 3GPP: 物理资源块, 数量, 空分复用流数, 调制编码方案, 表, 索引, 空口, 效率, 利用率, 速率, 效能, 性能, PRB, number, RANK, MCS, table, index, efficiency

**C.    DOCUMENTS CONSIDERED TO BE RELEVANT**

| Category* | Citation of document, with indication, where appropriate, of the relevant passages | Relevant to claim No. |
|---|---|---|
| PX | CN 117279026 A (CHINA UNITED NETWORK COMMUNICATIONS GROUP CO., LTD.) 22 December 2023 (2023-12-22) description, paragraphs [0084]-[0286] | 1-17 |
| A | CN 110166164 A (ZTE CORP.) 23 August 2019 (2019-08-23) description, paragraphs [0031]-[0271] | 1-17 |
| A | CN 107819549 A (HUAWEI TECHNOLOGIES CO., LTD.) 20 March 2018 (2018-03-20) entire document | 1-17 |
| A | US 2022109622 A1 (INTEL CORP.) 07 April 2022 (2022-04-07) entire document | 1-17 |
| A | WO 2019238131 A1 (HUAWEI TECHNOLOGIES CO., LTD.) 19 December 2019 (2019-12-19) entire document | 1-17 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 December 2024** | **16 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121509**

| Patent document cited in search report | | | Publication date (day/month/year) | Patent family member(s) | | | Publication date (day/month/year) |
|---|---|---|---|---|---|---|---|
| CN | 117279026 | A | 22 December 2023 | None | | | |
| CN | 110166164 | A | 23 August 2019 | KR | 20230162153 | A | 28 November 2023 |
| | | | | DK | 4224754 | T3 | 02 September 2024 |
| | | | | BR | 112020016369 | A2 | 15 December 2020 |
| | | | | US | 2021050930 | A1 | 18 February 2021 |
| | | | | US | 11522633 | B2 | 06 December 2022 |
| | | | | FI | 3739780 | T3 | 08 November 2023 |
| | | | | US | 2023081469 | A1 | 16 March 2023 |
| | | | | US | 12052095 | B2 | 30 July 2024 |
| | | | | WO | 2019154422 | A1 | 15 August 2019 |
| | | | | KR | 20200118832 | A | 16 October 2020 |
| | | | | KR | 102606154 | B1 | 23 November 2023 |
| | | | | JP | 2021513297 | A | 20 May 2021 |
| | | | | JP | 7257406 | B2 | 13 April 2023 |
| | | | | ES | 2959854 | T3 | 28 February 2024 |
| | | | | EP | 3739780 | A1 | 18 November 2020 |
| | | | | EP | 3739780 | A4 | 10 March 2021 |
| | | | | EP | 3739780 | B1 | 06 September 2023 |
| | | | | CA | 3090030 | A1 | 05 August 2019 |
| | | | | CA | 3090030 | C | 19 March 2024 |
| | | | | EP | 4224754 | A1 | 09 August 2023 |
| | | | | EP | 4224754 | B1 | 21 August 2024 |
| CN | 107819549 | A | 20 March 2018 | None | | | |
| US | 2022109622 | A1 | 07 April 2022 | DE | 102022211605 | A1 | 15 June 2023 |
| WO | 2019238131 | A1 | 19 December 2019 | None | | | |

Form PCT/ISA/210 (patent family annex) (July 2022)

**EP 4 787 937 A1**

**Patent documents cited in the description**

- CN 202311255631